# EUROPÄISCHE PATENTSCHRIFT

(11) **EP 2 647 109 B1**
(45) Veröffentlichungstag und Bekanntmachung des Hinweises auf die Patenterteilung: **20.03.2019**
(21) Anmeldenummer: 11801641.9
(22) Anmeldetag: 01.12.2011
(51) Int. Cl.: H02K 3/12, H02K 15/06, H02K 15/085, H02K 19/16, H02K 19/22

(54) **VERFAHREN ZUR HERSTELLUNG EINER STÄNDERWICKLUNG EINER ELEKTRISCHEN MASCHINE, INSBESONDERE ZUR HERSTELLUNG EINES WECHSELSTROMGENERATORS**
METHOD FOR PRODUCING A STATOR WINDING OF AN ELECTRIC MACHINE, IN PARTICULAR FOR PRODUCING AN AC GENERATOR
PROCÉDÉ DE FABRICATION D'UN ENROULEMENT DE STATOR D'UN MOTEUR ÉLECTRIQUE, NOTAMMENT DE FABRICATION D'UN GÉNÉRATEUR DE COURANT ALTERNATIF

(30) Priorität: 01.12.2010 DE 102010053719; 01.12.2010 DE 102010053718
(43) Veröffentlichungstag der Anmeldung: 09.10.2013
(73) Patentinhaber: SEG Automotive Germany GmbH, 70499 Stuttgart (DE)
(72) Erfinder: WOLF, Gert, 71563 Affalterbach (DE); HERBOLD, Klaus, 71679 Asperg (DE); WEBER, Gerlinde, 71701 Schwieberdingen (DE); RAU, Eberhard, 70825 Korntal-Muenchingen (DE); MUELLER, Alexander, 70191 Stuttgart (DE); KREUZER, Helmut, 71701 Schwieberdingen (DE); REUTLINGER, Kurt, 70174 Stuttgart (DE); SCHWARZKOPF, Christoph, 74399 Walheim (DE)
(74) Vertreter: Steinbauer, Florian
(86) Internationale Anmeldenummer: PCT/EP2011/071539
(87) Internationale Veröffentlichungsnummer: WO 2012/072754

(56) Entgegenhaltungen:
- EP-A2- 1 324 470
- DE-A1-102007 034 322
- DE-A1-102008 041 685
- US-A1- 2008 201 935
- US-A1- 2009 121 576

## Beschreibung

### Stand der Technik

In der DE 103 29 572 A1 ist ein Verfahren zur Herstellung eines elektromagnetisch erregbaren Kerns offenbart, bei dessen Herstellung eine bestimmte Ständerwicklung zum Einsatz kommt. Gegenüber der dort offenbarten und hergestellten Ständerwicklung ist vorgesehen, die axiale Ausladung der Spulenseitenverbinder zu verringern und damit die axiale Erstreckung der Ständerwicklung zu verkürzen. Der Begriff "axial" bezieht sich hierbei auf eine Drehachse eines Läufers der elektrischen Maschine.

Aus dem Dokument US 2008/0201935 A1 ist ein Verfahren zum Herstellen einer Ständerwicklung mit sechs Phasen bekannt. Mehrere einstückig verkettet gewickelte Spulen werden in einem Umformwerkzeug mit Nuten angeordnet. Eine jede einzelne Spule wird dabei jeweils einzeln in einer eigenen Nut angeordnet und dann umgeformt.

Des Weiteren ist aus dem Dokument EP 1 324 470 A2 ein Verfahren zum Herstellen einer Ständerwicklung bekannt. Dabei werden einzelne U-förmige Leitersegmente in einzelnen Nuten eines Umformwerkzeugs angeordnet und dann ein Umformschritt vorgenommen. Anschließend werden die Segmente zu Spulen verschaltet.

Aus dem Dokument US 2009/0121576 A1 ist die Herstellung einer Wellenwicklung bekannt.

### Offenbarung der Erfindung

Das erfindungsgemäße Verfahren wird durch die Merkmale des Anspruchs 1 festgelegt. Vorteilhafte Ausgestaltungen sind Gegenstand der auf diesen rückbezogenen Unteransprüche.

### Beschreibungen der Zeichnungen

Die Erfindung wird im Folgenden beispielhaft an Hand der Figuren näher erläutert. Es zeigen:
- Figur 1: einen Längsschnitt durch eine elektrische Maschine,
- Figur 2: den Vorgang des Herstellens einer Spule,
- Figur 3: einen Schritt, in dem die Spule geplättet wird,
- Figur 4a: eine Draufsicht auf einstückig verkettete und geplättete Spulen,
- Figur 4b: eine Seitenansicht auf die einstückig verketteten und geplätteten Spulen nach Figur 4a,
- Figur 5a: die sich in der Vorstufe befindende Phasenwicklung nach dem wechselseitigen Aufstellen der geplätteten Spulen,
- Figur 5b: eine räumliche Ansicht der Vorstufe der Phasenwicklung,
- Figur 6a: eine Vorstufe einer Phasenwicklung in einem Umformwerkzeug,
- Figur 6b: eine räumliche Darstellung, wie die in Figur 5a bzw. Figur 5b dargestellte Wicklung im Umformwerkzeug bzw. des Unterteils bzw. dessen Oberteil einliegt,
- Figur 7: eine Draufsicht auf das Umformwerkzeug und ganz besonders auf eine Unterseite des Unterteils,
- Figur 8a: in schematischer Weise die Position aller in das Umformwerkzeug eingelegten Phasenwicklungen,
- Figur 8b: eine räumliche Ansicht der in das Umformwerkzeug eingelegten Phasenwicklungen,
- Figur 8c: eine Alternative zum Steckverfahren gemäß Figur 8b,
- Figur 9: eine Seitenansicht auf das Umformwerkzeug nach dem Schränken,
- Figur 10: in schematischer Darstellung eine Seitenansicht auf einen in Nuten eines Ständerpakets einliegenden Bereich,
- Figur 11a und Figur 11b: zwei verschiedene Nutquerschnitte,
- Figur 11c und 11d: zwei verschiedene Verfahren zum Prägen der Spulenseiten, die in einer Nut zu liegen kommen sollen,
- Figur 12a bis e: die Lage der fünf Phasenwicklungen im Ständereisen, wobei die einzelnen Phasenwicklungen sechs Leiter pro Nut aufweisen,
- Figur 13: die Lage der Phasenwicklung aus Figur 12a im rundgebogenen Ständereisen,
- Figur 14a und b: den Vorgang des Schränkens einer Phasenwicklung für einen Ständer mit einer ungeraden Anzahl an Spulenseiten je Nut,
- Figur 15a bis e: die Lage von fünf Phasenwicklungen im Ständereisen, wobei die einzelnen Phasenwicklungen fünf Leiter pro Nut aufweisen,
- Figur 16: die Lage der Phasenwicklung aus Figur 15a im rundgebogenen Ständereisen,
- Figur 17: eine weitere alternative Position der Phasenwicklungen,
- Figur 18: unterschiedliche Spulenverbinder an selben Wickelköpfen,
- Figur 19a bis c: verschiedene Ausführungsformen von Spulenverbindern,
- Figur 20: eine Abfolge des Einbringens der Wicklung in das Ständereisen,
- Figur 21a bis c: drei verschiedene Verschaltungsarten von Fünfphasenwicklungen,
- Figur 22: einen schematischen Nutquerschnitt,
- Figur 23: einen schematischen Längsschnitt durch einen Rotor und ein Ständereisen,
- Figur 24a und 24b, Figur 25a und 25b, Figur 26a und 26b, Figur 27a und 27b, Figur 28a und 28b und Figur 29a und 29b: weitere Ausführungsbeispiele.

### Ausführungsformen der Erfindung

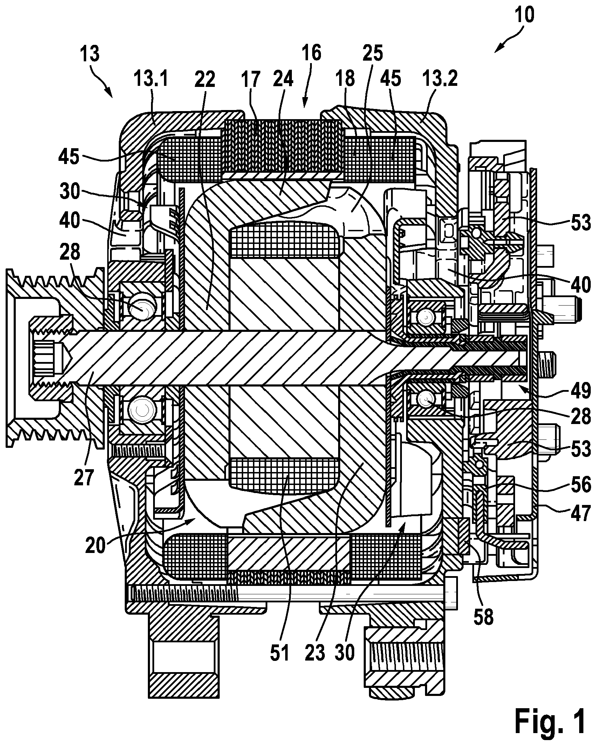

In Figur 1 ist ein Längsschnitt durch eine elektrische Maschine 10, hier in der Ausführung als Generator bzw. Wechselstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurch treten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

### Beschreibung der Wicklungsherstellung

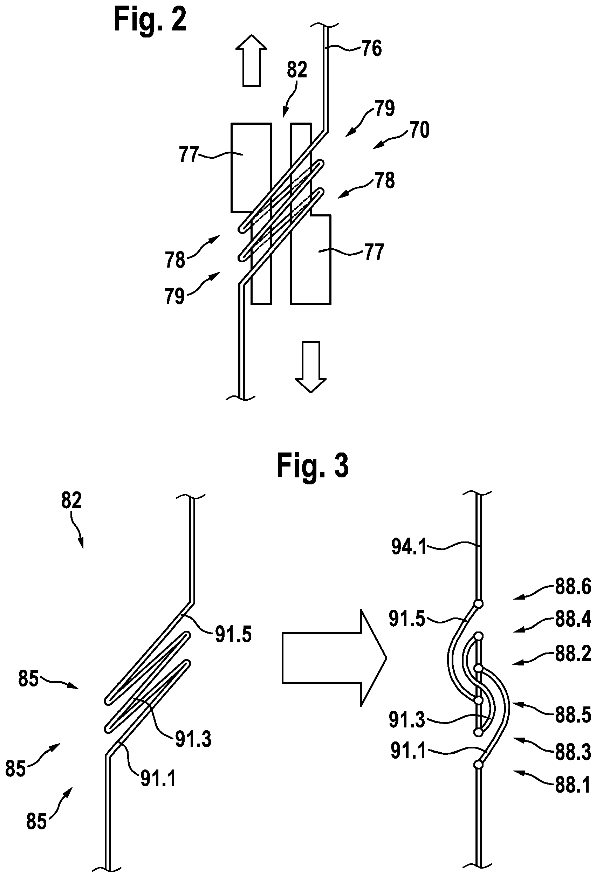

Figur 2 zeigt in einer Seitenansicht den Vorgang, bei dem auf eine Vorrichtung 70 zum Wickeln ein Draht 76 gewickelt wird. Die Vorrichtung 70 zum Wickeln weist zwei Teilschablonen 77 auf, die gegeneinander in einer Achsrichtung verschiebbar sind. Beide Teilschablonen 77 haben einen Absatz 78, so dass bei jeder Teilschablone 77 ein flacher Bereich 79 vorhanden ist. Um diese flachen bzw. niedrigen Bereiche 79 - in beide axiale Richtungen durch die Absätze 78 - begrenzt, wird eine schräge Spule 82 gewickelt. Die Spule 82 wird durch Herausziehen der Teilschablonen 77 aus der Spule 82 von der Vorrichtung 70 heruntergenommen, siehe auch Figur 3. Alternativ kann der Draht 76 auch direkt auf einander nicht zueinander versetzte Teilschablonen 77 gewickelt werden, so dass eine zunächst nicht-schräge Spule 82 über zwei einander direkt gegenüber angeordneten flachen bzw. niedrigen Bereichen 79 entsteht. Die schräge Spule 82 entsteht dann erst, wenn die beiden Teilschablonen 77 gegen den Widerstand der Spule 82 zueinander versetzt werden. Der Wickelvorgang kann dabei prinzipiell auf zwei Weisen vorgenommen werden: einerseits kann der Draht 76 um die unbewegten Teilschablonen 77 gewickelt werden und andererseits kann der Draht 76 um die sich um eine gemeinsame Achse drehenden Teilschablonen 77 gewickelt werden. Durch letzteres Vorgehen wird ein Verwinden des Drahtes 76 während des Wickelns vermieden.

In Figur 3 ist dargestellt, wie die Spule 82, nachdem sie von den Teilschablonen 77 abgenommen wurde, umgeformt wird. Die Spule 82 weist im Beispiel drei Windungen 85 auf. Eine jede Windung 85 weist zwei Spulenseiten 88 auf, die, so es sich hier im speziellen Fall um eine Spulenseite an einer speziellen Position handelt, getrennt durch einen Punkt mit einer weiteren Ziffer bezeichnet wird. Im rechten Teil der Figur 3 sind daher insgesamt sechs Spulenseiten als Spulenseiten 88.1, 88.2, 88.3, 88.4, 88.5 und 88.6 bezeichnet. Diese aufsteigende Folge orientiert sich an der Reihenfolge, in der die Spulenseiten gewickelt sind. Die Spulenseiten 88.1 und 88.2 sind durch einen Spulenseitenverbinder 91.1 einstückig miteinander verbunden, die Spulenseiten 88.2 und 88.3 sind durch einen nicht dargestellten Spulenseitenverbinder 91.2 einstückig miteinander verbunden, die Spulenseiten 88.3 und 88.4 sind durch einen Spulenseitenverbinder 91.3 einstückig miteinander verbunden, die Spulenseiten 88.4 und 88.5 sind durch einen nicht dargestellten Spulenseitenverbinder 91.4 einstückig miteinander verbunden, die Spulenseiten 88.5 und 88.6 sind durch einen Spulenseitenverbinder 91.5 einstückig miteinander verbunden.

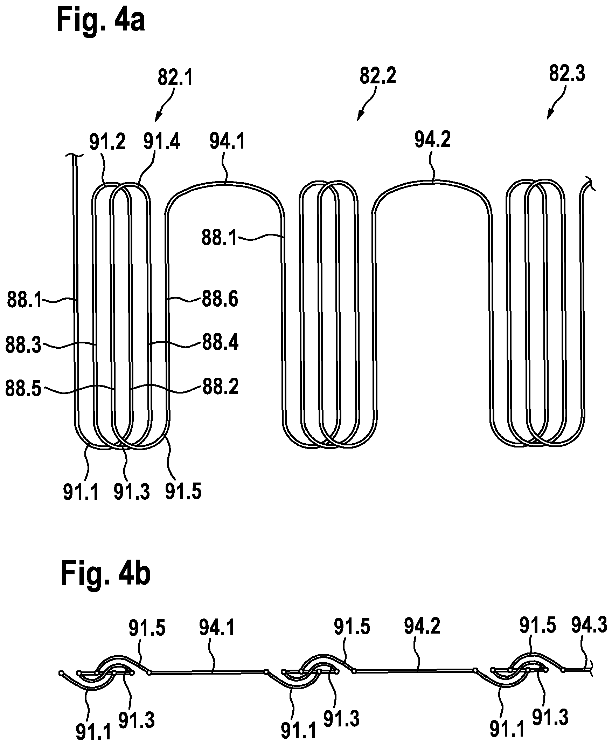

In Figur 4a sind in einer Draufsicht auf die flache Spule 82 (ist gleich die Spule 82.1) aus Figur 3 die Spulenseiten 88.1, 88.2, 88.3, 88.4, 88.5 und 88.6 erkennbar. Die Spulenseiten 88.1 und 88.2 sind durch den Spulenseitenverbinder 91.1 miteinander verbunden. So sind die beiden Spulenseiten 88.1 und 88.2 durch den Spulenseitenverbinder 91.1 verbunden. Die Spulenseiten 88.2 und 88.3 sind durch den Spulenseitenverbinder 91.2 verbunden, die Spulenseiten 88.3 und 88.4 durch den Spulenseitenverbinder 92.3, die Spulenseiten 88.4 und 88.5 durch den Spulenseitenverbinder 91.4, die Spulenseiten 88.5 und 88.6 durch den Spulenseitenverbinder 91.5 miteinander verbunden. Der Spulenseitenverbinder 91.5 liegt über den Spulenseitenverbindern 91.3 und 91.1, der Spulenseitenverbinder 91.3 liegt über dem Spulenseitenverbinder 91.1. Der Spulenseitenverbinder 91.4 liegt über dem Spulenseitenverbinder 91.2.

An die Spulenseite 88.6 schließt sich einstückig ein erster Spulenverbinder 94.1 an, dem wiederum eine Spulenseite 88.1 und so weiter - wie bereits zur ersten Spule 82 beschrieben - folgt. Der Aufbau der Spule 82.2 ist zunächst der gleiche wie jener der bereits beschriebenen Spule 82.1.

Der Zustand, wie er an Figur 4a dargestellt ist, ist dadurch erreicht worden, indem die in Figur 3 links dargestellte Spule 82 geplättet wurde, siehe auch Figur 3 rechts. In der Figur 3 von links betrachtet rechten Darstellung kann somit festgestellt werden, dass auf dem Spulenseitenverbinder 91.1 der Spulenseitenverbinder 91.2 liegt, so dass der Spulenseitenverbinder 91.1 durch den Spulenseitenverbinder 91.3 gekreuzt wird, auf den Spulenseitenverbinder 91.2 liegt der Spulenseitenverbinder 91.3, der den Spulenseitenverbinder 91.2 und auch den Spulenseitenverbinder 91.1 kreuzt, siehe auch Figur 4a und 4b.

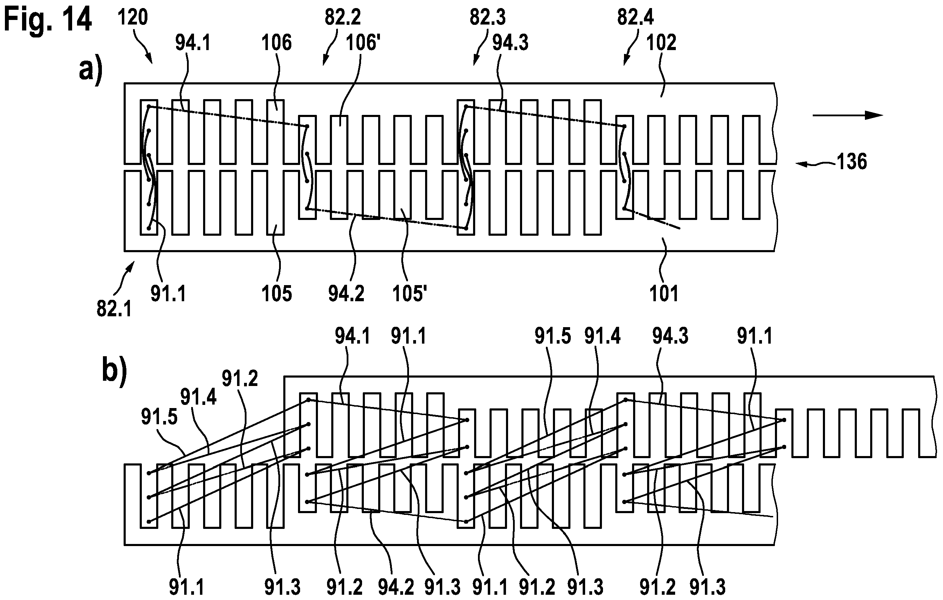

Im Beispiel nach Figur 4a ist eine jede Spule 82 mit einer Anzahl an Windungen 85 gewickelt, die ungerade ist. Alternativ kann auch ohne Weiteres vorgesehen sein, dass eine jede Spule 82 mit einer Anzahl an Windungen 85 gewickelt, die gerade ist. Wie später (Figur 14a und b) gezeigt wird, kann auch sinnvoll sein, dass Spule 82 mit einer Anzahl an Windungen 85 gewickelt wird, die gerade ist und eine andere Spule 82 mit einer Anzahl an Windungen 85 gewickelt wird, die ungerade ist. Dies ist lediglich eine Frage der elektrischen Auslegung der Maschine.

Gemäß Figur 3 und Figur 4b ist ein Verfahren vorgesehen, wonach Spulen 82 einer Phasenwicklung nach dem Wickeln von Windungen 85 derartig umgeformt werden, dass die Spulenseiten 88 einer Spule 82 zumindest nahezu in einer Ebene angeordnet sind. Es liegen dabei die Windungen 85 einer Spule 82 zumindest teilweise übereinander.

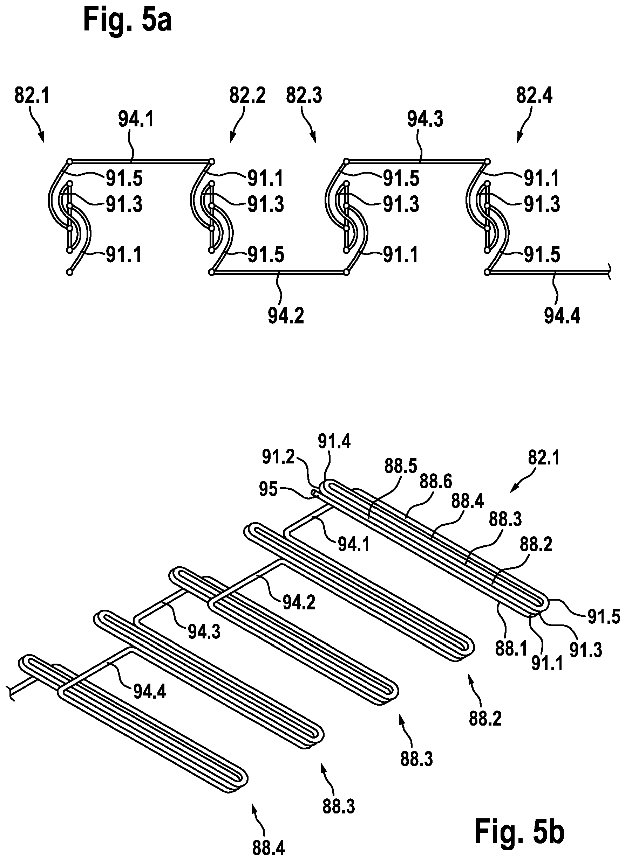

In Figur 5a ist dargestellt, wie die zuvor geplätteten, einstückig miteinander verbundenen Spulen 82 aufgestellt werden. Gegenüber dem Zustand, wie er in Figur 4b dargestellt ist, wird die Spule 82.1 gegenüber dem Spulenverbinder 94.1 um 90° gedreht. Gleichfalls wird die Spule 82.2 gegenüber dem Spulenverbinder 94.1 um 90° gedreht. Beide Drehungen der Spulen 82.1 und 82.2 sind einander entgegengesetzt, so dass insgesamt die beiden Spulen 82.1 und 82.2 zueinander um 180° gedreht werden. Relativ zum Spulenseitenverbinder 94.2 wird der Spulenseitenverbinder 94.1 empor gehoben. Die Spule 82.3 wird gegenüber dem Spulenverbinder 94.2 ebenfalls um 90° gedreht, genauso wie dies für die Spule 82.2 gegenüber dem Spulenverbinder 94.2 gilt. Die Drehungen der Spulen 82.2 bzw. 82.3 sind einander entgegen gesetzt, so dass auch in diesem Fall die resultierenden Drehungen der beiden Spulen 82.2 und 82.3 zueinander um 180° erfolgen. Das Ergebnis des Aufstellens bzw. Drehens der einzelnen Spulen 82.1, 82.2, 82.3, ... ist in Figur 5a schematisch zu erkennen. Für den Fall, das beispielsweise eine insgesamt 16-polige Anordnung (16-polige Ausführung einer Phasenwicklung) vorgesehen ist, werden insgesamt sechzehn Spulen 82, d. h. die Spulen 82.1 bis 82.16 gegeneinander aufgestellt. Dieser Aufstell- bzw. Drehvorgang wird für jede Vorstufe bzw. jede Phasenwicklung, die später in ein Ständereisen einzulegen ist, vorgenommen. Ist vorgesehen, ein Ständereisen mit drei Phasen herzustellen, so werden drei Phasenwicklungen entsprechend behandelt und in die Nuten des Ständereisens eingelegt bzw. eingesetzt. Bei fünf, sechs oder gar sieben Phasen wird dies analog bei fünf, sechs oder gar sieben Phasen vorgenommen.

Es ist demnach Verfahrensschritt vorgesehen, wonach zwei direkt benachbarte Spulen 82.1, 82.2 einer Phasenwicklung zwischen sich einen einstückig mit den zwei direkt benachbarten Spulen 82.1, 82.2 verbundenen Spulenverbinder 94.1 aufweisen, wobei die eine Spule 82.1 und die andere Spule 82.2 gegenüber dem Spulenverbinder 94.1 jeweils um einen Betrag von im Wesentlichen neunzig Winkelgraden verdreht werden, wobei die Drehrichtungen einander entgegengesetzt sind.

In Figur 5b ist eine räumliche Ansicht der Vorstufe der Phasenwicklung aus Figur 5a dargestellt. In dieser Darstellung ist die Lage der einzelnen Spulenseiten 88.1 bis 88.6 dargestellt. Des Weiteren sind die Spulenseitenverbinder 91.1 bis 91.5 dargestellt, sowie ein Anfang 95 der Spule 82.1. Die folgenden Spulen 88.2 bis 88.4 sind ebenfalls analog Figur 5a dargestellt.

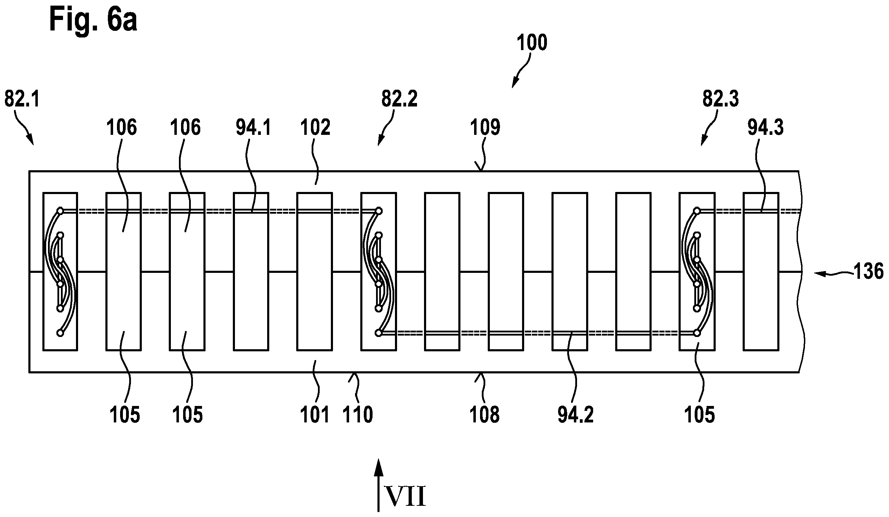

In Figur 6a ist eine Seitenansicht auf ein Umformwerkzeug 100 dargestellt. Das Umformwerkzeug 100 ist im Wesentlichen zweiteilig und weist ein Unterteil 101 und ein Oberteil 102 auf.

Sowohl das Unterteil 101 als auch das Oberteil 102 haben eine im Wesentlichen quaderförmige Außenkontur. Auf einer Seite des Unterteils 101 und auf einer Seite des Oberteils 102 sind jeweils Nuten eingebracht. Diese Nuten des Oberteils 102 und die Nuten des Unterteils 101 stehen einander gegenüber, so dass zwei einander gegenüber stehende Nuten einen gemeinsamen Raum bilden. Die Nuten sind sowohl im Oberteil und auch im Unterteil derartig eingebracht, dass diese sich zwischen zwei Stirnseiten geradlinig erstrecken. Die Anzahl der Nuten im Oberteil 102 entspricht vorzugsweise der Anzahl der Nuten im Unterteil 101 und vorzugsweise der Anzahl der Nuten des Stators 16. Das Unterteil 101 zeigt dabei eine Stirnseite 108, dass Oberteil eine Stirnseite 109. Im Unterteil 101 sind die Nuten 105, im Oberteil die Nuten 106 eingebracht. Verglichen mit der in Figur 5a dargestellten Vorstufe der Phasenwicklung wird diese, so wie ihre Spulen 82.1 etc. aufgestellt sind, in die Nuten 105 des Unterteils 101 eingesetzt. Der Abstand der einzelnen Spulen 82.1, 82.2, 82.3 etc. ist dabei derartig, dass bei einer Ständerwicklung mit fünf Phasenwicklungen vier Nuten zwischen den Spulen, welche direkt nebeneinander einstückig benachbart sind, angeordnet sind. Handelt es sich um eine Ständerwicklung, die drei Phasenwicklungen aufweist, so sind analog dazu zwei Nuten zwischen den einzelnen Spulen 82 angeordnet. Handelt es sich um eine fünfphasige Ständerwicklung, so sind wie hier im Bild vier Nuten 105 bzw. 106 zwischen den einzelnen Spulen 82 angeordnet.

Es ist demzufolge ein Verfahren zur Herstellung einer Ständerwicklung in einer elektrischen Maschine 10, insbesondere eines Wechselstromgenerators beschrieben, wobei die Ständerwicklung 18 zumindest n-Phasenwicklungen aufweist und eine Phasenwicklung mehrere direkt aufeinanderfolgende gewickelte Spulen 82 mit Spulenseiten 88 und Spulenseitenverbindern 91 hat, wobei sich die Spulen 82 in erste und zweite Spulen aufteilen. Es wird des Weiteren ein Umformwerkzeug 100 bereitgestellt, in welchem Nuten 105 bzw. 106 vorhanden sind, die geeignet sind, die Spulen 82 aufzunehmen. Eine erste Spule ist eine Spule an einer bestimmten Position der Vorstufe der Phasenwicklung bzw. der Phasenwicklung selbst, während eine zweite Spule eine andere Spule 82 ist, die der ersten Spule als nächste Spule 82 folgt. Dementsprechend ist vorgesehen, dass eine erste Spule in einer Nut und eine zweite Spule in einer anderen Nut angeordnet sind. Zwischen der ersten Spule und der zweiten Spule 82 sind bestimmungsgemäß n - 1 Nuten angeordnet.

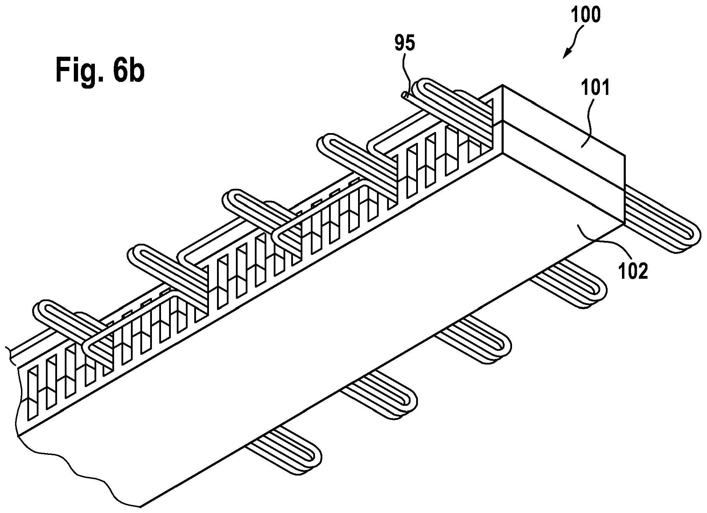

In Figur 6b ist in räumlicher Weise dargestellt, wie die in Figur 5b bzw. Figur 5a dargestellte Wicklung im Umformwerkzeug 100 bzw. des Unterteil 101 bzw. dessen Oberteil 102 einliegt.

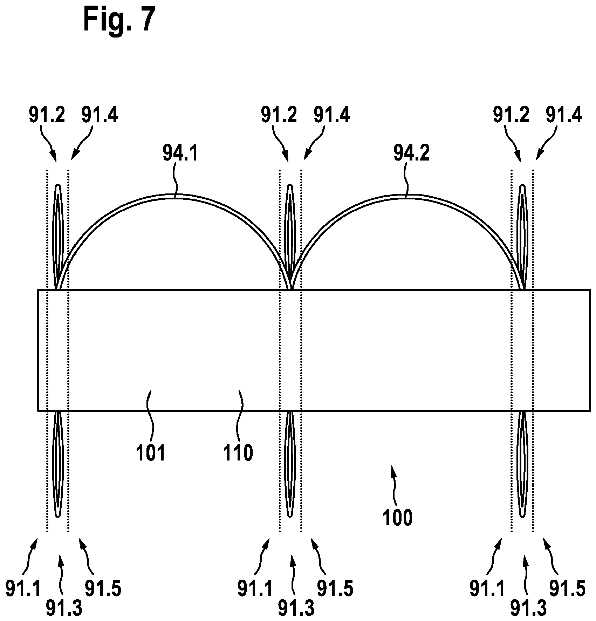

In der Seitenansicht gemäß Figur 7 sind die Spulenseitenverbinder 91.2 und 91.4 erkennbar, siehe auch Figur 4a. Des Weiteren sind in ebenso schematischer Ansicht die Spulenverbinder 94.1 und 94.2 dargestellt. Am unteren Ende des Umformwerkzeugs 100 ragen die Spulenseitenverbinder 91.1, 91.3 und 91.5 aus den Nuten 105 bzw. 106. In der Darstellung der Figur 7 ist nur eine Vorstufe einer Phasenwicklung dargestellt, wie auch schon in Figur 6 geschehen.

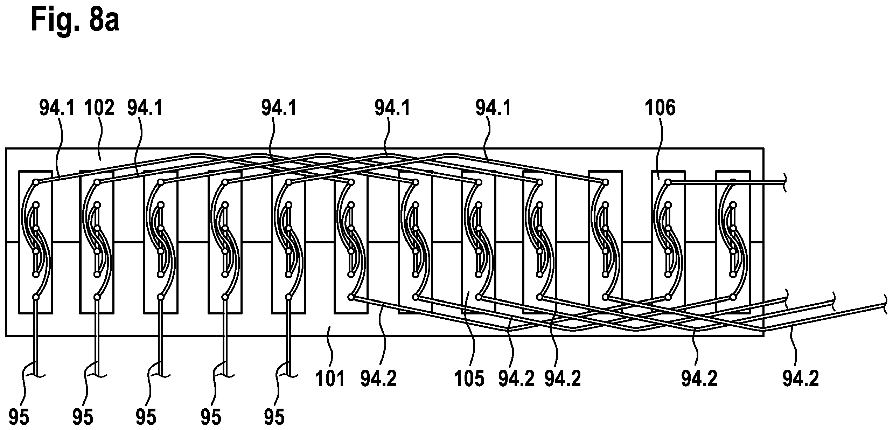

In Figur 8a ist eine schematische Darstellung gezeigt, die insgesamt fünf Phasenwicklungen bzw. deren Vorstufen im Umformwerkzeug 100 bzw. den beiden Werkzeugsteilen Unterteil 101 bzw. Oberteil 102 einliegen. Die hier dargestellten Spulenverbinder sind alle aus Sicht des Betrachters der Figur 8a hinter den Unterteilen 101 bzw. Oberteilen 102 angeordnet. Gleichfalls gilt dies für die Spulenverbinder 94.2 der einzelnen Phasenwicklungen.

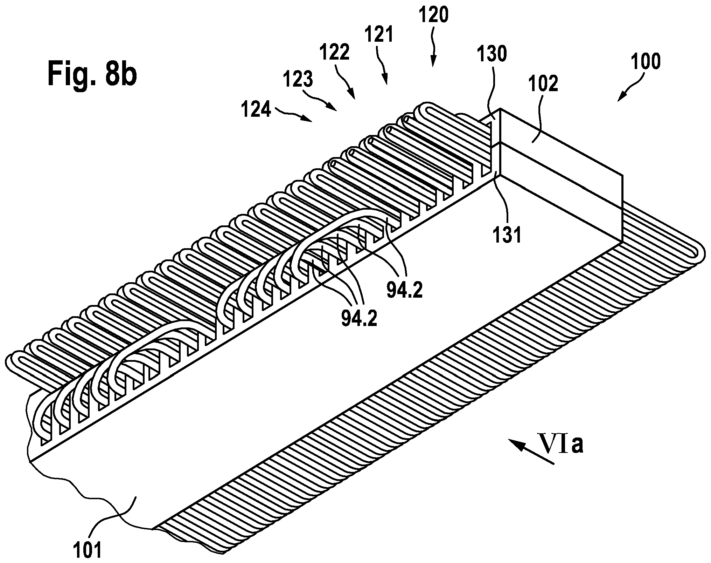

Figur 8b zeigt eine räumliche Ansicht der in Figur 8a gezeigten Anordnung. Im Umformwerkzeug 100 sind die fünf Vorstufen der Phasenwicklungen eingelegt. Diese Anordnung im Umformwerkzeug 100 umfasst insgesamt fünf Phasenwicklungen, die für einen Ständerkern vorgesehen sind, der achtzig nach radial innen offene Nuten aufweist. Gemäß der hier gezeigten Konfiguration sind im später fertig hergestellten Ständereisen sechs übereinander gestapelte Leiter pro Nut vorgesehen. Die fünf Phasenwicklungen 120, 121, 122, 123 und 124 sind in diesem Fall in die zuvor aufeinander gesetzten Teile des Umformwerkzeugs 100, das Unterteil 101 und das Oberteil 102, von deren axialer Stirnfläche 130 bzw. 131 in die Nuten 105 bzw. 106 gesteckt worden.

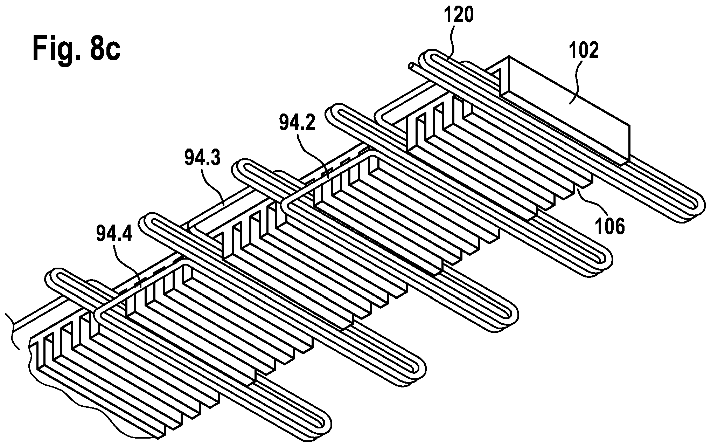

In Figur 8c ist eine Alternative zum Steckverfahren gemäß Figur 8b dargestellt. Gemäß Figur 8c ist ein Oberteil 102 bereitgestellt, in dessen Nuten 106 die einzelnen Phasenwicklungen bzw. deren Vorstufen hierzu eingesetzt sind. Während gemäß dem Ausführungsbeispiel nach Figur 8b keine Reihenfolge bestimmt zu werden braucht, welche Phasenwicklung zuerst in die Nuten 105 bzw. 106 eingeführt wird, sondern lediglich berücksichtigt werden muss, wie die einzelnen Spulenverbinder 91.2 zueinander angeordnet sein sollen, ist gemäß dem Ausführungsbeispiel nach Figur 8c bezüglich der Lage der einzelnen Spulenverbinder 94.2 und der weiteren Spulenverbinder 94.3, 94.4 etc. eine genaue Reihenfolge einzuhalten. Um die in Figur 8b dargestellte Struktur der Lage der einzelnen Spulenverbinder 94 im Umformwerkzeug 100 erreichen zu können, ist es gemäß der Ausführungsvariante nach Figur 8c erforderlich, die einzelnen Phasenwicklungen nach einer bestimmten Reihenfolge in das Oberteil 102 des Umformwerkzeugs einzulegen. So ist zunächst mit der Phasenwicklung 124 zu beginnen, anschließend ist die Phasenwicklung 123 einzulegen, dieser folgt die Phasenwicklung 122 und wiederum anschließend die Phasenwicklung 121, um dann letztlich die Phasenwicklung 120 einzulegen. Durch diese Reihenfolge ergibt sich die in Figur 8b gezeigte Anordnung der Spulenverbinder 94.2. Nachdem die im Beispiel fünf Phasenwicklungen 120 bis 124 in das Oberteil 102 eingelegt sind, wird auf die Wicklung bzw. auf das Oberteil 102 das Unterteil 101 gesetzt. Dieser Schritt ist hier nicht dargestellt, nach diesem Schritt ist die Situation jedoch die gleiche wie die in Figur 8b dargestellte.

Es ist vorgesehen, dass im Umformwerkzeug 100 alle Phasenwicklungen 120 bis 124 gleichzeitig aufgenommen sind, um gleichzeitig umgeformt zu werden. Hierbei ist vorgesehen, dass die Spulenverbinder 94 ihre axiale Länge nicht verringern, während die Spulenseitenverbinder 91 ihre axiale Länge bzw. Ausladung während des Umformvorgangs reduzieren.

Alternativ können die Phasenwicklungen 120 bis 124 auch in das Unterteil 101 eingesetzt werden. Die Reihenfolge der einzusetzenden Phasenwicklungen ist dann anzupassen, wenn das gleiche Ergebnis wie in Figur 8b erreicht werden soll. Dem entsprechend wird dann zuerst die Phasenwicklung 120, dann die Phasenwicklung 121, dann die Phasenwicklung 122, dann die Phasenwicklung 123, dann die Phasenwicklung 124 eingesetzt.

Wie bereits zu Figur 8b bzw. Figur 8c beschrieben, ist vorgesehen, dass die Phasenwicklungen 120 bis 124 entweder in Richtung der Spulenseiten (Figur 8b) oder quer dazu in das Umformwerkzeug 100 eingesetzt werden. Einlegen der Spulenseiten 88 quer zum Umformwerkzeug 100 bedeutet, dass die Bewegungsrichtung beim Einlegen in das Umformwerkzeug zumindest eine Komponente aufweist, die senkrecht zu den Spulenseiten 88 und der Drahtrichtung gerichtet ist.

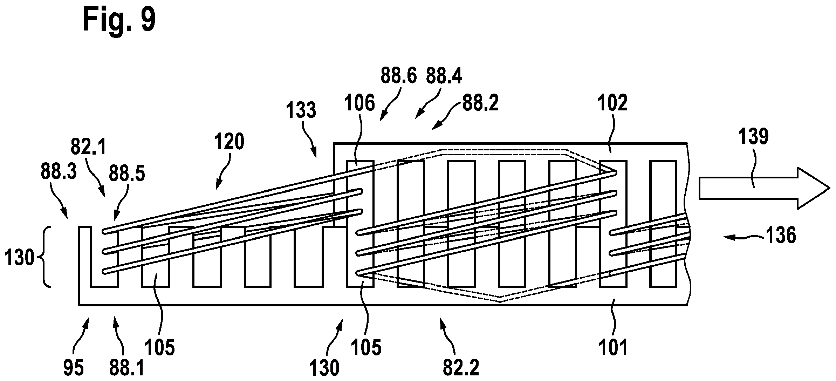

In Figur 9 ist der nächste Schritt dargestellt, der auf die Anordnung gemäß Figur 8b folgt. Der Übersichtlichkeit halber ist hier nur die Phasenwicklung 120 dargestellt. Mit den anderen hier nicht dargestellten Phasenwicklungen 121 bis 124 passiert genau das gleiche, wobei die entsprechenden Phasenwicklungen lediglich versetzt um jeweils eine Nut 105 im Unterteil 101 bzw. eine Nut 106 im Oberteil 102 eingesetzt sind. Wie zuvor erläutert, weist eine jede Spule 82 Spulenseiten 88 auf. Diese Spulenseiten 88.1, 88.3 und 88.5 bilden eine Gruppe 130. Diese Gruppe 130 hat das Merkmal, wonach diese im Unterteil 101 und dort in einer Nut 105 einliegt, ohne in die Nut 106 des Oberteils 102 hineinzuragen.

Des Weiteren ist eine andere Gruppe 133 zu erkennen, welche die Spulenseiten 88.2, 88.4 und 88.6 umfasst. Den Spulenseiten 88.2, 88.4 und 8.6 dieser Gruppe 133 ist gemein, dass diese Spulenseiten 88 in einer Nut 106 des Oberteils 102 einliegen und sich nicht soweit erstrecken, dass diese in eine Nut 105 ragen.

Diese Merkmale der Gruppen 130 bzw. 133 haben den Sinn, dass dadurch eine Trennebene 136 definiert ist, in der Spulenseiten 88 nicht liegen und demzufolge diese Trennebene 136 durch die Spulenseiten 88, insbesondere Spulenseiten 88.5 und 88.2 nicht blockiert werden kann. Dies ist insoweit von Bedeutung, als dass das Oberteil 102 gegenüber dem Unterteil 101 verschoben werden soll. Gemäß dem nun vorgesehenen weiteren Verfahrensschritt ist vorgesehen, dass entsprechend dem Pfeil 139 das Oberteil 102 relativ zum Unterteil 101 verschoben wird, um dadurch die Spulenseiten der Gruppe 133 gegenüber den Spulenseiten 88 der Gruppe 130 soweit zu verschieben, dass die Spulenseiten 88 der Gruppe 133 gegenüber einer weiteren Gruppe 130 in einer Nut 105 zu liegen kommt, die zu einer anderen Spule, nämlich der Spule 82.2 zugehörig sind. Die Gruppe 133 wird dabei soweit verschoben, dass in Verschieberichtung der Spulenseiten 88 nach dem Verschieben zwischen den beiden Gruppen 130 und 133 einer Spule 82 n - 1 Nuten 105 angeordnet sind. Da in diesem Ausführungsbeispiels n fünf ist, ist zwischen der Gruppe 130 der Spule 88.1 und der Gruppe 133 der Spule 82.1 ein Abstand von vier Nuten 105. Es ist demgemäß ein Verfahren vorgesehen, wonach eine oder mehrere Phasenwicklungen 121, 122, 123, 124, 125 in Nuten 105, 106; 105', 106' eines Umformwerkzeugs 100 eingesetzt werden und eine jede Spule 82 Spulenseiten 88 aufweist, wobei eine Gruppe 133 der Spulenseiten 88 so gegenüber einer anderen Gruppe 130 der Spulenseiten 88 derselben Spule 82 verschoben und dadurch umgeformt wird, dass zwischen beiden Gruppen 130, 133 in Verschieberichtung der Spulenseiten 88 n - 1 Nuten an 105 angeordnet sind. Würde es sich bei dem Ausführungsbeispiel um einen dreiphasigen Aufbau handeln, so wäre die Anzahl der Nuten 105 zwischen den beiden Gruppen 130 bzw. 133 zwei Nuten 105. Bei einem sechsphasigen Aufbau wäre der Abstand n - 1 = 5, bei einem siebenphasigen Aufbau der Abstand n - 1 = 6 Nuten 105.

Es ist vorgesehen, dass im Umformwerkzeug 100 alle Phasenwicklungen 120 bis 124 gleichzeitig aufgenommen sind, um gleichzeitig umgeformt zu werden. Es ist jedoch prinzipiell auch möglich, die Phasenwicklungen 120 bis 124 einzeln, jede für sich umzuformen um erst im Anschluss daran die Phasenwicklungen 120 bis 124 aufeinander zu setzen.

Die Wicklungen werden aus dem Werkzeug entnommen, indem das Oberteil 102 vom Unterteil 101 in späterer radialer Richtung (Stapelrichtung der Spulenseiten 88) entfernt und die Wicklung erst dann aus dem Werkzeug entnommen wird. Das Oberteil 102 und das Unterteil 101 müssen daher in zwei Ebenen bzw. Achsenrichtungen gegeneinander beweglich sein (spätere Umfangsrichtung und spätere radiale Richtung).

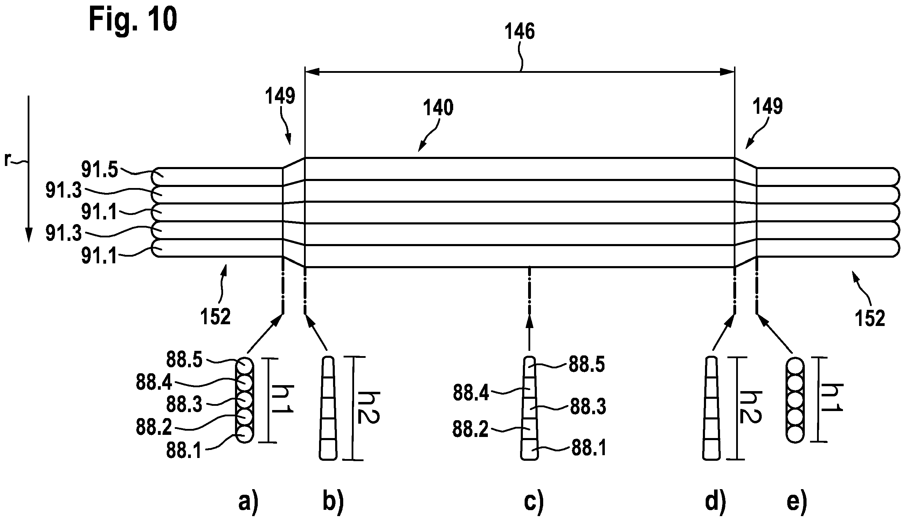

In Figur 10 ist stark schematisiert eine Ansicht auf Spulenseiten 88 dargestellt. Im Unterschied zu dem zuvor beschriebenen Ausführungsbeispiel weist dieser Nutabschnitt 140 nicht sechs Spulenseiten 88.1 bis 88.6, sondern fünf Spulenseiten 88.1 bis 88.5 auf. Dies liegt darin begründet, dass bei der Herstellung beispielsweise gemäß Figur 8a bzw. 9 erste und zweite Spulen 82 unterschiedliche Windungszahlen aufweisen. So weist eine erste Spule beispielsweise drei Windungen auf, während eine zweite Spule zwei Windungen aufweist. Bei einer derartigen Konstellation ergeben sich nach dem Verschieben gemäß Figur 9 fünf Spulenseiten, die übereinander angeordnet sind und dadurch in eine Nut eines Ständereisens eingelegt werden können. An der linken Seite der Figur 10 ist mit r die Richtung angezeigt, die von einem späteren Mittelpunkt eines runden Ständereisens ausgehend die Zunahme des Radius' angibt. Mit anderen Worten: der untere Spulenseitenverbinder 91.1 befindet sich radial am weitesten außen, während der Spulenseitenverbinder 91.5 radial am innersten angeordnet ist. Die in Figur 10 radial am weitesten außen liegender Spulenseitenverbinder 91.1 und 91.3 sind ursprünglich Spulenseitenverbinder einer zweiten Spule mit lediglich zwei Windungen, während die radial weiter innen liegenden Spulenseitenverbinder 91.1 bis 91.5 die Spulenseitenverbinder einer ersten Spule mit drei Windungen sind. Auf dieses Phänomen wird an anderer Stelle später in der Beschreibung noch eingegangen werden.

Die Figur 10 zeigt einen Endzustand eines Nutabschnitts 140 und von Übergangsbereichen 149, die beiderseits des Nutabschnitts 140 jeweils angeordnet sind. Jeweils außerhalb der Übergangsbereiche 149 schließen sich Wickelkopfbereiche 152 an. Gemäß dem vorgesehenen Verfahrensschritt liegt vor dem Verprägen über die gesamte Länge des Abschnitts 146, des Übergangsbereichs 149 und auch des Wickelkopfbereichs 152 für die einzelnen hier nicht näher bezeichneten Drahtabschnitte in der hier gewählten Ausgangsform ein Runddrahtquerschnitt vor, wie er unter a skizziert ist. Durch das Umformen bzw. Verprägen ist vorgesehen, aus dem mit a bzw. unter a skizzierten Querschnittsbereich bzw. den Abschnitt 146 derartig zu verformen, dass die Drähte keinen runden Querschnitt mehr aufweisen, sondern die Außenkontur der Gesamtheit aller Spulenseiten 88 eine trapezförmige Außenkontur (Einhüllende) aufweisen, c). Diese trapezförmige Kontur soll über den gesamten Abschnitt 146, der in einer Nut eines Ständereisens eingelegt werden wird, in der gleichen Form geprägt sein, siehe auch b) und d). An den endseitigen Positionen des Abschnitts 146 beginnt jeweils ein Übergangsbereich 149, der einige wenige Millimeter lang ist. Am vom Abschnitt 146 abgewandten Ende des Übergangsbereichs 149 geht der Übergangsbereich 149 in den bereits erwähnten Querschnitt über, wie er zu a) beschrieben wurde. Der Querschnittsbereich - wie er hier für e) skizziert ist, ist der gleiche wie zu a). Der Übergangsbereich ist erfindungsgemäß definiert geprägt und stellt eine Kontur dar, die im Bezug auf die elektrische Maschine in axialer Richtung (Drehachse des Rotors) kontinuierlich vom trapezförmigen Querschnitt in den runden Querschnitt der Einzeldrähte übergeht.

Es ist demnach vorgesehen, dass die Spulen 82 einen geprägten Übergangsbereich 149 zwischen Spulenseiten 88 und Spulenseitenverbindern 91 erhalten.

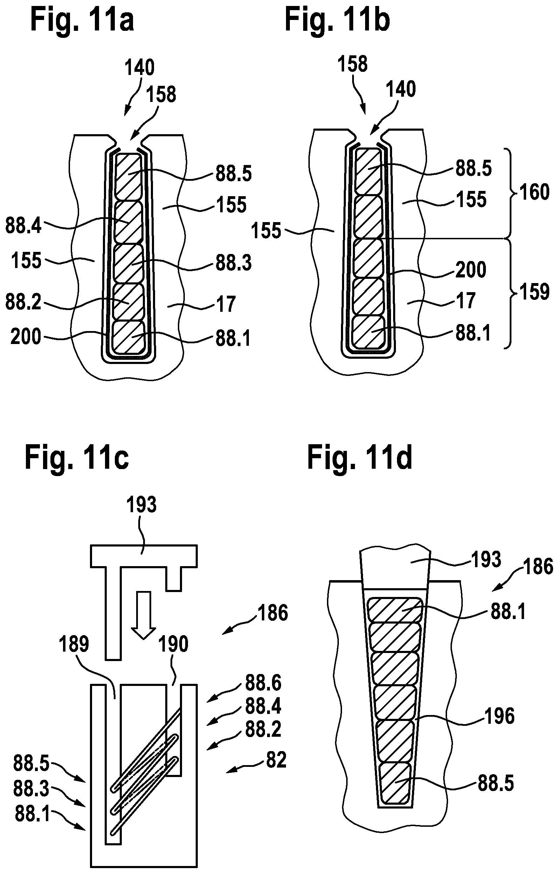

In Figur 11a und Figur 11b sind ausschnittweise Seitenansichten des Querschnitts zweier Nutabschnitte 140 zweier verschiedener Ausführungsbeispiele dargestellt. Dieser Nutabschnitt 140 ist zwischen zwei Zähnen 155 in einer Nut 158 eingefügt. Während die linke Nut in Figur 11a insgesamt einen trapezförmigen Querschnitt der Spulenseiten 88.1 bis 88.5 aufweist, weist die Nut 158 in Figur 11b einen etwas komplexeren Nutquerschnitt auf. So ist im Bereich des Nutabschnittes 159 der Nutquerschnitt rechteckförmig, während er im Nutabschnitt 160 wiederum trapezförmig ist. Die Lage der Spulenseiten 88.1 bis 88.5 ist dabei wie folgt: Die Spulenseite 88.1 ist im Bezug zum Ständereisen 17 radial am Weitesten außen, während die Spulenseite 88.5 radial am weitesten innen gelegen ist. Wie bereits durch Vergleich mit Figur 10, Querschnitt b) mit dem Querschnitt aus Figur 10a) erkannt werden kann, wird durch das Verprägen des Nutabschnitts 140 erreicht, dass die ursprünglich im Querschnitt rund ausgeführten Drähten bzw. Drahtquerschnitte so verformt werden, dass beispielsweise die radial innen gelegene Spulenseite 88.5 in Umfangsrichtung verhältnismäßig stark gequetscht wird.

Wie in Figur 11a) und Figur 11b) gezeigt, ist vorgesehen, dass die Spulenseiten 88.1 bis 88.5 und damit verschiedene Spulenseiten unterschiedlich geprägt werden. Wie in Figur 11c und Figur 11d gezeigt, ist vorgesehen, die Spulenseiten 88 in einem Prägewerkzeug 186 zu prägen. Während dies gemäß der schematischen Figur 11c beispielsweise in einem frühen Stadium des Wicklungsverfahrens möglich ist, beispielsweise kurz nach dem Wickeln der Spule 82, wobei die Spulenseiten 88.1, 88.3 und 88.5 zunächst in eine Prägenut 189 eingesetzt werden, die von einer Prägenut 190 für die Spulenseiten 88.2, 88.4 und 88.6 getrennt ist. Mittels eines Prägestempels 193 wird dann die Spule 82 noch vor dem Verschieben der Spulenseiten nach Figur 9 geprägt. Gemäß Figur 11d ist es alternativ auch möglich, in einem späteren Verfahrensschritt bspw. nach dem Schränken, die Spulenseiten 88.1 bis 88.5 in einer Prägenut 196 gemeinsam und auf einmal mittels eines Prägestempels 193 zu prägen.

Das Prägen gemäß Figur 11d) kann auch derartig vorgenommen werden, dass alle Phasenwicklungen 120 bis 124 mit allen ihren Spulenseiten gleichzeitig in einem Prägewerkzeug 186 geformt werden (bspw. nach dem Schränken).

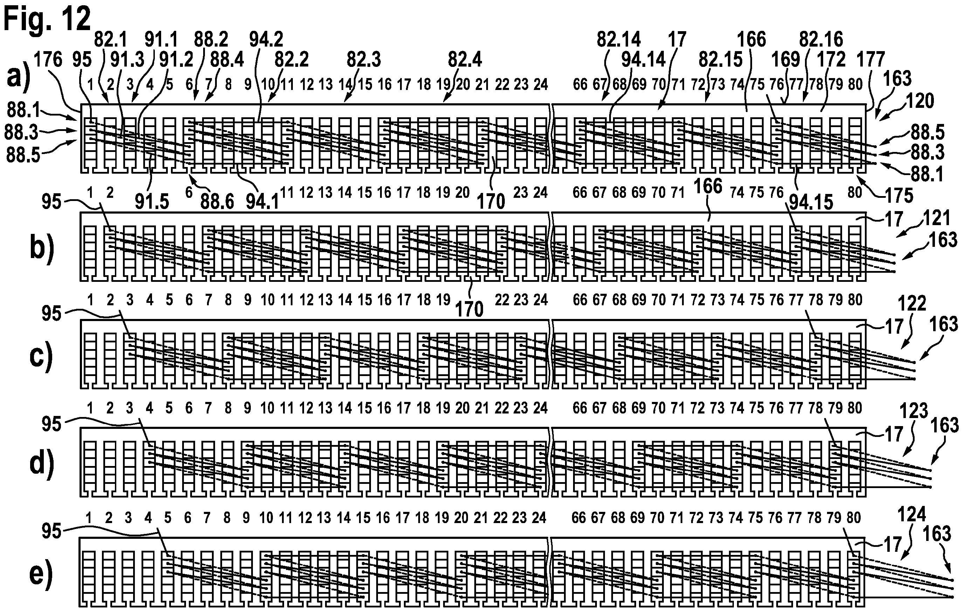

In Figur 12a) bis e) ist das Ständereisen 17 zur übersichtlicheren Darstellung nach Einlage der Phasenwicklungen 120 bis 124 so dargestellt, dass im Ständereisen die einzelnen Phasenwicklungen 120 bis 124 jeweils getrennt im Ständereisen 17 dargestellt sind. Die einzelnen Phasenwicklungen 120 bis 124 sind grundsätzlich von ihrem Aufbau her gleich. Der Unterschied der einzelnen Phasenwicklungen 120 bis 124 ist lediglich darin begründet, dass diese jeweils um eine Nut versetzt beginnend in das Ständereisen 17 eingelegt sind. Die Phasenwicklung 120, welche in Nut 1 beginnend eingelegt ist, weist einen sogenannten Wicklungsüberhang 163 auf. Da dieses Ständereisen ein Ständereisen 17 ist, welches nach der sogenannten Flachpakettechnik hergestellt ist, siehe beispielsweise auch die eingangs zitierte Schrift, wird ein derartiges Ständereisen 17 durch Stapeln von einzelnen im Wesentlichen geraden Lamellen 166 gebildet. Diese Lamellen 166 sind in der Regel zumindest im Nutbereich deckungsgleich und werden in Richtung der Nuten 158 gestapelt, so dass ein im Wesentlichen quaderförmiges Lamellenpaket bzw. Ständereisen 17 entsteht. Diese Lamellen 166 werden üblicherweise im Rahmen dieser Paketherstellung beispielsweise mittels Schweißnähten auf einer Rückseite 169 eines Jochs 172 oder in der Innenseite der Nut miteinander zu einem festen Paket verbunden. Nach dem Einlegen aller Phasenwicklungen 120 bis 124 in das Ständereisen 17 wird dieses derartig rund gebogen, dass die Öffnungen bzw. Nutschlitze 175 der Nuten 158 nach radial innen zeigen. Die beiden Stirnflächen 177 bzw. 176 werden dabei aneinandergelegt und dann mittels einer Verbindungstechnik wie Schweißen miteinander stoffschlüssig verbunden. Das Ständereisen ist dann mit der Ständerwicklung 18 komplett und kann in die elektrische Maschine 10 bzw. zwischen die beiden Lagerschilde 13.1 und 13.2 eingebaut werden.

Die Lage der Phasenwicklung 120 im Ständereisen 17 ist dabei wie folgt: Die einzelne Phasenwicklung ist dabei, wie zuvor beschrieben, anhand der Figuren 2 bis einschließlich Figur 9. Die Phasenwicklung im Zustand gemäß Figur 9 weist ihren Phasenanschluss 95 senkrecht zur Blattebene auf, der hinter das Unterteil 101 gerichtet ist. Die in Figur 9 dargestellte Phasenwicklung 120 mit dem Bezug zur Figur 12a, quasi um den Pfeil 136 in Figur 9 gedreht, so dass der Phasenanschluss 95 nach dem Drehen und wie in Figur 12a gezeigt, oben links, d. h. in Nut 1 in der äußersten Nutlage angeordnet ist. Von diesem Phasenanschluss 95 erstreckt sich eine Spulenseite 88.1 in der ersten Nutlage in Nutrichtung hinter das Ständereisen 17, um dort nach dem Übergang in den Spulenseitenverbinder 91.1 und dem Eintreten in die Nutlage 4 in Nut 6 in die Spulenseite 88.2 überzugehen. Von dort ausgehend tritt der Draht aus der Nut 6 aus und geht dort in den Spulenseitenverbinder 91.2 über, der an der Vorderseite des Ständereisens 17 in die Nutlage 2, d. h. die zweitäußerste radiale Lage in der Nut 1 eintritt. Dort geht der Draht in die Spulenseite 88.3 über. Von dort geht der Draht anschließend in den Spulenseitenverbinder 91.3, dann in die Spulenseite 88.4 (Nutlage 5, zweitinnerste Position), um von dort wieder in den Spulenseitenverbinder 91.4 überzugehen, der in die dritte Position und die Spulenseite 88.5 übergeht. Der Draht verlässt auf der Rückseite der Nut 1 in Nutposition 3 die Nut 158, geht wiederum in einen Spulenseitenverbinder, nämlich den Spulenseitenverbinder 91.5 über, der nach dem Durchlaufen der Nut 6 an der radial innersten Position und dem Dasein als Spulenseite 88.6 dort wiederum austritt und an der radial innersten Position als Spulenverbinder 94.1 in die radial äußerste Position übergeht. Die einzelnen weiteren Stationen des Drahtes sind dabei kurz gefasst wie folgt:
a) Eintritt in Nut 11, radial innerste Position (Nutlage 6), Spulenseite 88.1, danach
b) Spulenseitenverbinder 91.1,
c) Nut 6, Nutlage 3, Spulenseite 88.2;
d) Spulenseitenverbinder 91.2;
e) Spulenseite 88.3 (zweitinnerste radiale Nutlage), Nutlagenposition 5,
d) Spulenseitenverbinder 91.3,
e) Eintritt in die zweitäußerste Nutlage in Nut 6, Spulenseite 88.4,
f) Spulenseitenverbinder 91.4,
g) Spulenseite 88.5, Nut 11, Nutlage 4,
h) Spulenseite 91.5,
i) Spulenseite 88.6, Nut 6, radial äußerste Nutlage,
j) Nutlage 1, Übergang in den Spulenverbinder 94.2, der über die radial äußerste Lage, d. h. von Nut 6, Nutlage 1 in Nut 11, Nutlage 1 übergeht.

Die Phasenwicklung 120 endet dann körperlich im bereits erwähnten Wicklungsüberhang 163, der theoretisch an einer Nutposition 81 liegt, jedoch später in die Nut 1 kurz vor dem Abschluss des Rundbiegens des Ständereisens 17 einzufügen ist. Dieser Wicklungsüberhang 163 besteht aus drei Spulenseiten 88.1, 88.3 und 88.5. Das Phasenwicklungsende endet aber nicht im Überhang, sondern noch im Ständereisen. siehe auch Figur 12.

Die Phasenwicklung 121, Figur 12b, ist wie bereits erwähnt dementsprechend um eine Nut versetzt und beginnt an Nut 2 an der gleichen Position bezüglich Nutlage. Gleiches gilt für die Phasenwicklung 121, die in der Nut 3 beginnt, die Phasenwicklung 123, die in der Nut 4 beginnt und die Phasenwicklung 124, die in der Nut 5 beginnt. Der Wicklungsüberhang 136 der Phasenwicklung 121 liegt damit theoretisch an der Nutposition 2 und wird später vor dem Abschluss des Rundbiegens in die Nut 2 auf die dort bereits befindlichen Spulenseiten 88.1, 88.3 und 88.5 eingelegt. Die Phasenwicklung 121 hat ebenfalls einen Wicklungsüberhang 163, der jedoch an der Nutposition 3 liegt und dementsprechend später vor dem Abschluss des Rundbiegens in die Nut 3 auf die Spulenseiten 88.1, 88.3 und 88.5 eingefügt wird. Der Wicklungsüberhang 163 der Phasenwicklung 123 befindet sich an der Nutposition 4 und wird vor dem Rundbiegen bzw. vor dem Abschluss des Rundbiegens in die Nut 4 auf die Spulenseiten 88.1, 88.3 und 88.5 eingefügt. In gleicher Weise wird der Wicklungsüberhang 163 der Phasenwicklung 124, an der Nutposition 5 befindlich, vor dem Abschluss des Rundbiegens in die Nut 5 auf die Spulenseiten 88.1, 88.3 und 88.5 gesetzt.

Gemäß dem Ausführungsbeispiel nach Figur 12 sind ausgehend von dem jeweiligen Stirnende 176 bzw. 177 jeweils n Phasenanschlüsse 95 in den ersten n Nuten 158 bzw. in den letzten n Nuten 158 n Phasenanschlüsse 180.

Die Spulen 82 sind jeweils sogenannt zweischichtig ausgeführt. D. h., dass die Spulenseiten 88 in radial unterschiedlichen (zwei) Schichten angeordnet sind.

Des Weiteren liegt eine jede typische zweite Spule 82.2 (82.4, 82.6, 82.8, 82.10, 82.12, 82.14, 82.16) mit ihren Spulenseiten (88.1, 88.3, 88.5; 88.2, 88.4, 88.6) in zwei Nuten 158 ein, wobei zwei Spulenverbinder 94.1 und 94.2 zu zwei Spulenseiten 88.1 und 88.6 benachbarter Spulen 82.1 und 82.3 verbinden, d. h. jeweils die erste bzw. letzte Spulenseite einer benachbarten Spule verbinden, wobei diese Spulenseiten 88.6 bzw. 88.1 die in denselben Nuten 158 einliegen wie die Spulenseiten 88.1, 88.3, 88.5; 88.2, 88.4, 88.6 der dazwischenliegenden Spule 82.2.

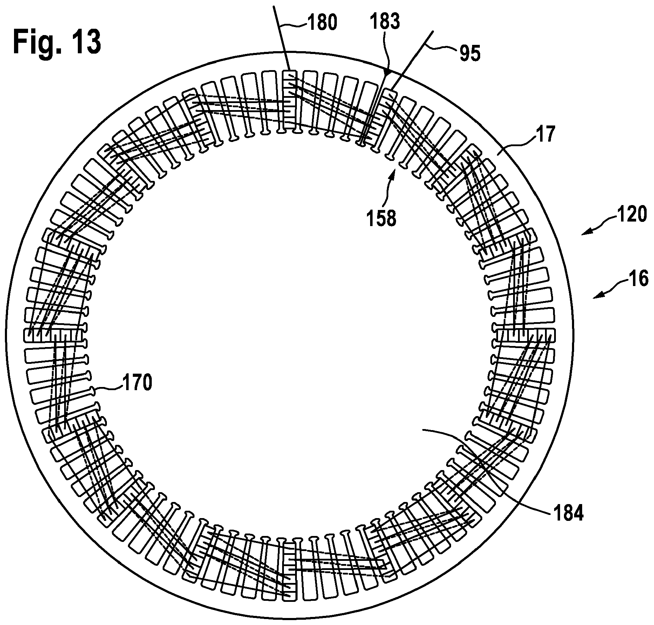

Figur 13 zeigt die Phasenwicklung 120 im Ständereisen 17 nach dem Rundbiegen des Ständereisens 17 mit den Phasenwicklungen 120 bzw. 124. Der Einfachheit und Übersichtlichkeit wegen ist hier auf die Darstellung der Phasen 121 bis 124 verzichtet worden. Wie bereits in Figur 12a bis e angedeutet, ist die Position der anderen Phasenwicklungen 121 bis 124 gegenüber der jeweils vorhergehenden Phasenwicklungen lediglich um eine Nut versetzt, anfangend bei der Phasenwicklung 120. Es ist des Weiteren ein Phasenanschluss 180 sowie eine Schweißnaht 183 erkennbar, die die beiden Stirnenden 177 bzw. 176 miteinander verbindet. Das Ständereisen 17 hat eine im Wesentlichen zentrale Öffnung 184 Die Figur 13 zeigt die anschlussseitige Ansicht des Stators 16, die üblicherweise die Seite ist, die in der als Wechselstromgenerator ausgebildeten elektrischen Maschine 10 dem Gleichrichter zugewandt ist.

Des Weiteren lässt sich der Stator 16 auch so beschreiben, dass an seinem Innenumfang und an seinem Außenumfang des Ständereisens 17 jeweils mindestens eine Gruppe einschichtiger Spulenverbinder 94.1; 94.2 mehrerer Phasenwicklungen 120, 121, 122, 123, 124 angeordnet sind, wobei die Spulenverbinder 94.1; 94.2 in unmittelbar benachbarten Nuten 158 angeordnet sind und einander kreuzen. Zwischen einer Gruppe einschichtiger Spulenverbinder 94.2 am Außenumfang des Ständereisens 17 und einer Gruppe einschichtiger Spulenverbinder 94.1 am Innenumfang des Ständereisens 17 sind Spulenseitenverbinder 91 mehrerer Phasenwicklungen 120, 121, 122, 123, 124 angeordnet.

In Figur 14 a und b ist ein Ausführungsbeispiel für die Herstellung einer Phasenwicklung 120 dargestellt, die fünf Spulenseiten 88 pro Nut aufweist. Wie bereits zu Figur 3 erläutert, wird hierzu eine erste Spule 82.1 mit drei Windungen 85 und eine zweite Spule 82.2. mit zwei Windungen 85 gewickelt. Diese Reihenfolge wird in der entsprechend benötigten Anzahl wiederholt, so dass sich beispielsweise insgesamt eine Wicklung mit sechzehn Spulen 82 ergibt.

Analog zu den Vorgängen, die im Zusammenhang mit den Figuren 4a, 4b und 5a erläutert wurden, werden die einzelnen aufeinanderfolgenden Spulen 82 um jeweils 90° gedreht, so dass sich bzgl. der einzelnen Phasenwicklung die in Figur 14 dargestellte Gestalt ergibt.

Damit die Lage der einzelnen Spulen 82.2 und 82.4 - ganz allgemein der Spulen, die weniger Windungen 85 als andere Spulen 82 aufweisen - so ist, dass das Unterteil 101 relativ zum Oberteil 102 verschoben werden kann, sind die Nuten im Ober- und Unterteil, welche Spulen 82.2 und 82.4 mit weniger Windungen 85 aufnehmen sollen, mit einer geringeren Nuttiefe als die anderen Nuten ausgestattet. Es folgen somit bei einer Phasenzahl von fünf, dass auf fünf Nuten 105 bzw. 106, die Spulen 82.1, 82.3, ... mit mehr Windungen 85 aufnehmen, weitere fünf Nuten 105' bzw. 106' folgen, die Spulen 82.2, 82.4, ... mit weniger Windungen 85 aufnehmen. Bei einer Phasenzahl von drei, sechs oder sieben folgen jeweils drei, sechs oder sieben dieser Nuten 105, 105', 106, 106' aufeinander. Im Anschluss nach dem Einsetzen aller Phasenwicklungen 120 bis 124 (nicht dargestellt), wird dass das Oberteil 102 relativ zum Unterteil 101 verschoben. Nachdem alle Phasenwicklungen 120 bis 124 nach dem Schränken nicht in einer Schicht angeordnet sind, die nur die fünf vorgesehenen Nutlagen im Ständereisen 17 umfasst, müssen die sich im Umformwerkzeug 100 auf insgesamt sechs Nutlagen angeordneten Phasenwicklungen 120 bis 124 derart in sich verschoben werden, dass die fünf vorgesehenen Nutlagen erreicht sind.

Mit Bezug zu den Figuren 6a und 14 ist demnach vorgesehen, dass das Umformwerkzeug 100 ein mit Nuten 105, 105' versehenes Unterteil 101 und ein mit Nuten 106, 106' versehenes Oberteil 102 hat, wobei die Nuten 105, 106 entweder eine gleiche Nuttiefe (Figur 6a) oder unterschiedliche Nuttiefen (Figur 14) aufweisen.

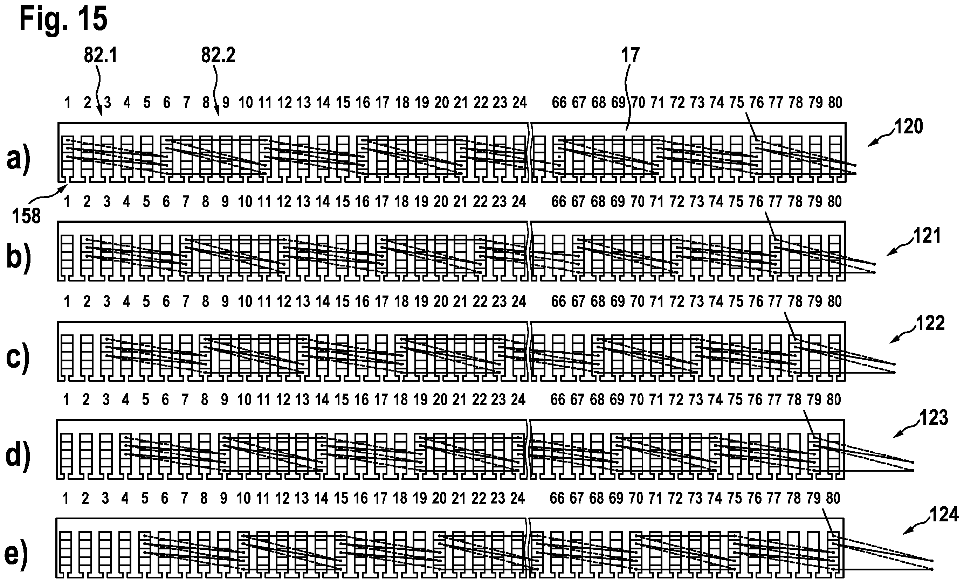

In den Figuren 15a bis 15e sind in sehr ähnlicher Art und Weise fünf Phasenwicklungen in einem zweiten Ausführungsbeispiel dargestellt. Diese fünf Phasenwicklungen 120 bis 124 weisen im Unterschied zu der Darstellung nach Figur 12a bis e lediglich fünf Spulenseiten 88 je Nut 158 auf. Damit gehen unterschiedliche Windungszahlen für die Spulen einher. So hat zwar die erste Spule, wie auch die Phasenwicklungen gemäß Figur 12, drei Windungen. Die zweite Spule weist jedoch gegenüber der ersten Spule nur noch zwei Windungen auf. Es ist dementsprechend eine Spule 82.1 offenbart, die eine Anzahl an Windungen aufweist, die ungerade ist und eine Spule 82.2 offenbart, deren Anzahl an Windungen gerade ist. Im Ausführungsbeispiel gemäß Figur 14 ist dabei die Spule 82.1 eine erste Spule und die andere Spule 82.2 eine zweite Spule. Das Herstellungsverfahren für die Phasenwicklungen 120 bis 124, wie sie in Figur 15 gezeigt sind, ist dementsprechend mit Bezug zu Figur 6a leicht anders: Während die Spule 82.1 nach wie vor drei Windungen aufweist, weist die Spule 82.2 nur noch zwei Windungen auf. Ein Umformwerkzeug, wie es prinzipiell in Figur 6a dargestellt ist, ist somit zur Herstellung der Phasenwicklungen 120 bis 124 gemäß Figur 15 dahingehend etwas anders, als dass die Nuten 105 bzw. 106 im Unterteil 101 bzw. Oberteil 102 an der Position der zweiten Spule 82.2 ausgehend von der Trennebene 136 etwas weniger tief ausgeführt wäre, s. a. Figur 14a und b. So ist beispielsweise der Spulenverbinder 94.1 von der ersten Spule 82.1 kommend dementsprechend etwas zur Trennebene 136 geneigt, um dann etwas näher zur Trennebene 136 hin gerichtet in die Nut 106' zu ragen. Der Spulenverbinder 94.2 kommt dementsprechend an einer Position aus der Nut 105' raus, die etwas näher an der Trennebene 136 angeordnet ist. Der Spulenverbinder 94.2 ragt dann wieder in der Nut 105, an der sich die Spule 82.3 befindet, wieder an der am weitesten von der Trennebene 136 entfernten Position in die Nut 105 hinein.

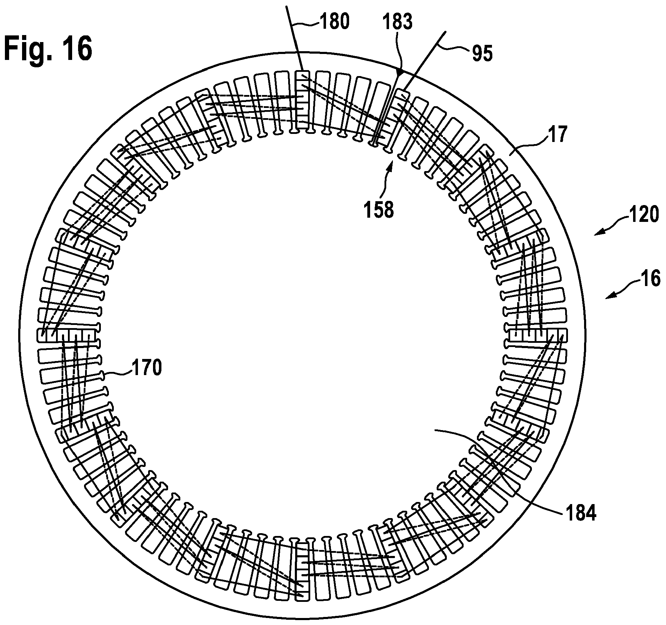

Während die in Figur 13 dargestellte Anordnung ein Ständereisen 17 bzw. einen Stator 16 zeigt, der fünf Phasen aufweist, die in 80 Nuten angeordnet sind und sechs Leiter pro Nut, d. h. sechs Spulenseiten 88 je Nut aufweisen, ist in ganz analoger Weise in Figur 16 ebenso ein fünfphasiger Stator 16 dargestellt, dessen Phasenwicklungen 120 bis 124 in 80 Nuten angeordnet sind und fünf Spulenseiten 88 je Nut 158 aufweist.

In Figur 16 ist die Ansicht des Stators 16 jene, die üblicherweise einem Gleichrichter zugeordnet ist. Die dem gegenüberliegende Seite ist üblicherweise die Seite, die eine Antriebsseite, d. h. einem Lagerschild zugewandt ist, das zu einer Riemenscheibe hin, jedenfalls einem Antrieb des Rotors, nächstgelegen ist.

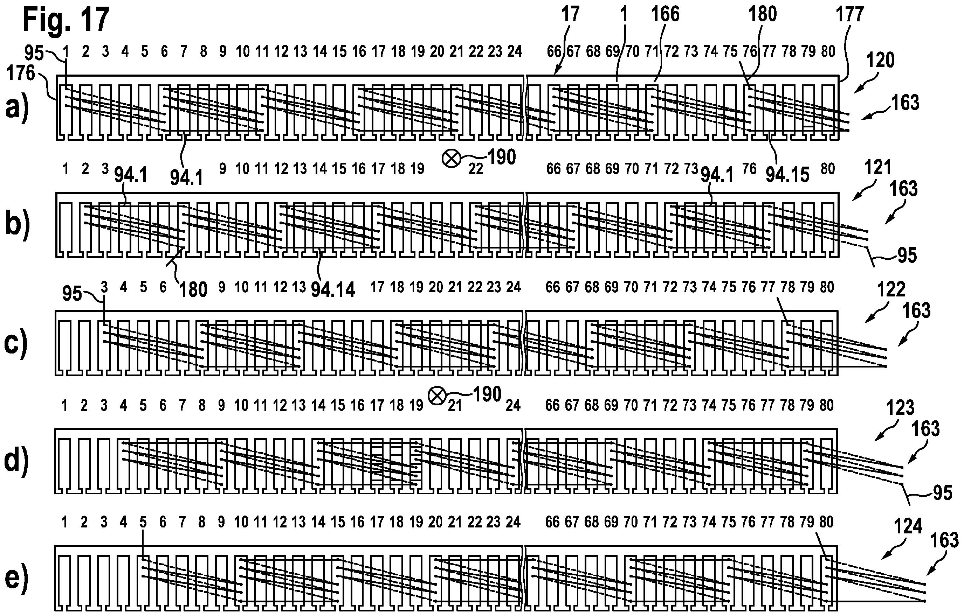

Nachfolgend wird in Figur 17 beschrieben, wie die Phasenwicklung 120 bis 124 alternativ zueinander in das Ständereisen 17 eingelegt werden können. Während in Figur 17a die Phasenwicklung 120 genauso eingelegt ist, wie es in Figur 12a der Fall ist, ist verglichen mit Figur 12b die Phasenwicklung 121 mit den Spulenseiten, die zuvor den Wicklungsüberhang 163 gebildet haben, in die zweite Nut eingelegt, wobei der Phasenanschluss 95 bzw. der Anschluss 180 auf derselben Seite des Ständereisens 17 angeordnet sind, wie es die Anschlüsse 95 bzw. 180 der Phasenwicklung 120 sind. Mit anderen Worten: Die Phasenwicklung 121 ist zwar von der Herstellung her genau gleich wie die Phasenwicklung 120, ist jedoch um eine Achse 190, die in Stapelrichtung der Lamellen 166 orientiert ist, gedreht, und zwar um 180°.

Die Phasenwicklung 122 ist wiederum genauso in das Ständereisen 17 eingelegt, wie es auch in Figur 12c der Fall ist; die Phasenwicklung 123 wiederum ist gegenüber der Phasenwicklung 120 um die Achse 190 gedreht und gleichzeitig wiederum, wie in Figur 12d, beginnend in der vierten Nut in das Ständereisen 17 eingesetzt. Wie in Figur 17b gezeigt, ist die Phasenwicklung 121 ebenso beginnend in der zweiten Nut, wie die Phasenwicklung 121 gemäß Figur 12b. Die Phasenwicklung 124 ist genauso angeordnet wie in Figur 12e gezeigt. Die Phasenwicklungen 121 bis 124 haben wiederum Wicklungsüberhänge 163, die dieselben Nuten belegen bzw. sich an dieselben Nutpositionen erstrecken wie beim Ausführungsbeispiel gemäß Figur 12. Die Wicklungsüberhänge der Phasenwicklung 121 bzw. 123 sind jedoch anders aufgebaut und weisen jeweils einen Phasenanschluss 95 auf.

Gemäß dem Ausführungsbeispiel nach Figur 17 sind ausgehend von dem jeweiligen Stirnende 176 bzw. 177 jeweils n Phasenanschlüsse 95 in den Nuten 158 im Bereich des Stirnendes 176. In den Nuten 158 im Bereich des Stirnendes 177 sowie des Stirnendes 176 befinden sich verteilt die Phasenanschlüsse 180.

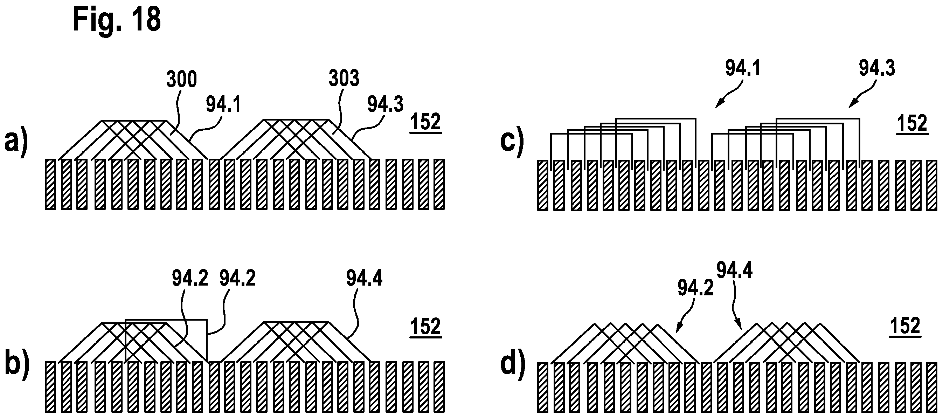

In Figur 18a bis d sind zwei verschiedene Ausführungsbeispiele von Wickelköpfen 152 auf der Seite des Ständers 16 dargestellt, die dem Gleichrichter am nächsten gelegen ist. So kann beispielsweise auf der radialen Außenseite eine Wickelkopfes 152 vorgesehen sein, dass ein Spulenverbinder 94.2 einer Gruppe von Spulenverbindern 94.2, die erste Spulen 82.1 mit zweiten Spulen 82.2 verbinden nicht wie die anderen dreieckig sondern viereckig gestaltet ist. Auf der Innenseite dieses Wickelkopfes 152 sind beispielsweise die Zwischenräume zwischen den Schenkeln einer Seite dreieckiger Spulenverbinder 94.1 mit einem Verguß 300 oder einer Klebeschicht 303 verschlossen. Es können aber auch alle Zwischenräume einer Gruppe von Spulenverbindern 94.3 verschlossen sein. Beides kann alternativ ausgeführt sein.

Figur 18c und 18d zeigen verschiedene Anordnungen von Spulenverbindern 94. So sind in dem dort dargestellten Ausführungsbeispiel auf der Innenseite des Wickelkopfs 152 nur rechteckige Spulenverbinder 94.1 und 94.3 ausgebildet, die zudem gestaffelt bzw. gestuft sind (zunehmende maximale Auslenkung des Wickelkopfes). Dagegen sind die Spulenverbinder 94.2 und 94.4 auf der radialen Außenseite gleichmäßig und dreieckig ausgeführt.

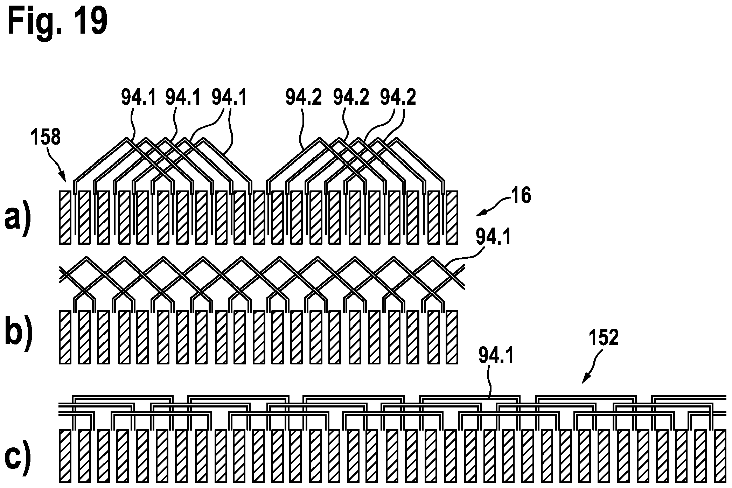

In Figur 19 ist eine Ansicht auf ein Ständereisen 17 gemäß Figur 12a bis 12b gezeigt, nachdem die Phasenwicklungen 120 bis 124 in das Ständereisen 17 eingelegt sind. Der entsprechende Ausschnitt zeigt die Nuten 158 an der Position 6 bis einschließlich die Nut 158 an der Position 25. In diesem Fall ist die Gestaltung der Spulenverbinder 94.1 bzw. 94.2 derart, dass diese sich dreieckförmig nach axial außen erstrecken. Ein jeder Spulenverbinder 94.1 kreuzt andere Spulenverbinder 94.1 insgesamt vier Mal. Gleiches gilt für die Spulenverbinder 94.2 in Figur 17a. Die Spulenverbinder 94.1 können, brauchen jedoch nicht dreieckförmig, wie in Figur 19a gezeigt, ausgeführt sein, sondern können genauso gut bogenförmig (halbkreisförmig) ausgeführt sein. In jedem Fall würden diese bogenförmigen Spulenverbinder benachbarte Spulenverbinder 94 ebenso insgesamt vier Mal kreuzen.

Im Ausführungsbeispiel nach Figur 19b ist die Situation dargestellt, die für ein Ständereisen 17 mit den Phasenwicklungen 121 bis 124 nach Figur 17 aufweist. Die Spulenverbinder 94.1 sind gleichmäßig über den Umfang des Ständereisens 17 bzw. auch im flachen Zustand über die gesamte Länge des Ständereisens 17 gleichmäßig verteilt. Dies hat beispielsweise den Vorteil, dass sich dadurch keine Unstetigkeitsstellen am Umfang des Ständers ergeben und dadurch die Geräuschentwicklung eher gleichmäßig ist. In Figur 19c ist eine Abwandlung des Ausführungsbeispiels nach Figur 19b dargestellt, wonach die Spulenverbinder 94.1 rechteckförmig einerseits aus den Nuten 158 hervorstehen und andererseits in axialer Richtung unterschiedliche Positionen einnehmen. Dies hat den Vorteil, dass sich der sogenannte Wickelkopf bzw. die Wickelkopfbereiche 152 nicht so stark in radialer Richtung erstrecken. Der Wickelkopf bzw. der Wickelkopfbereich 152 hat eine geringere radiale Erstreckung als die Ausführungsbeispiele nach Figur 19a und 19b.

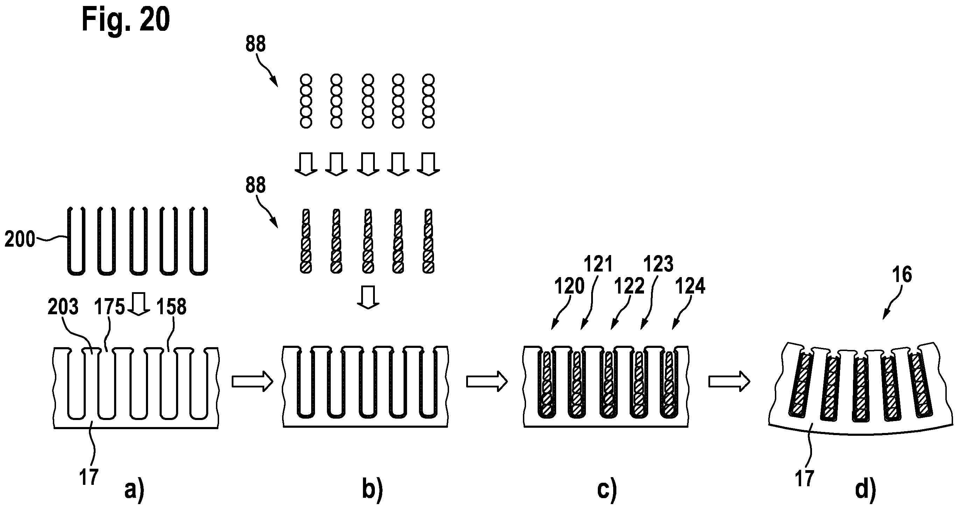

In Figur 20a bis d sind die verschiedenen Montagereihenfolgen dargestellt. So ist zunächst vorgesehen, dass nach dem Bereitstellen des Ständereisens 17 die Isolationsfolien 200 in die Nuten 158 eingesetzt werden. In bevorzugter Ausführungsform werden Isolationsfolien so ausgeführt, dass deren in Richtung zu einem Zahnkopf 203 gerichtete Enden unterhalb des Zahnkopfs 203 noch in der Nut 158 enden, ohne den Nutschlitz 175 zu verengen, siehe auch Figur 20b. Nach dem Einsetzen der Isolationsfolie werden die Phasenwicklungen 120 bis 124 in das vorisolierte Ständereisen 17 eingesetzt. Die Spulenseiten 88 der Phasenwicklungen 120 bis 124 sind in ihrem Querschnitt zuvor umgeformt worden und dabei der Querschnitt an die Nutform im rundgebogenen Zustand des Ständereisens 17 angepasst. Durch das Umformen des im Ausgangszustand runden Drahts wird angestrebt, dass der Wickelkopf 152 radial nicht vergrößert wird. Es ist demzufolge vorgesehen, dass die für eine Nut 158 vorgesehenen Spulenseiten in ihrer gesamten radialen Erstreckung eine Höhe h2 aufweisen, die nach dem Umformen bzw. Prägen der Spulenseiten 88 einer Nut größer ist als die Höhe h1 der Gesamtheit der Spulenseiten 88, die für eine Nut 158 vorgesehen ist. Die Höhe h1 ist dabei die Summe der unverprägten Spulenseiten 88.1 bis 88.5 (Kupferquerschnitt mit Lack- bzw. Harzisolierung). Nach dem Einsetzen, Figur 20c, der Spulenseiten 88 der Phasenwicklungen 120 bis 124 wird das Ständereisen 17 rundgebogen, so dass ein zylinderförmiges bzw. zylinderringförmiges Ständereisen und insgesamt ein Stator 16 entsteht.

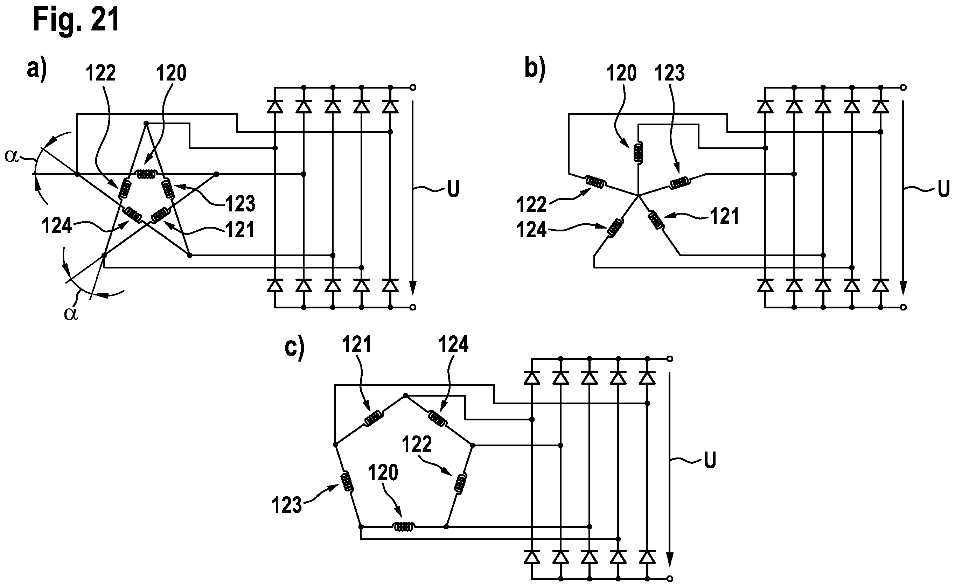

Gemäß Figur 21a, b und c sind für eine fünfphasige Ständerwicklung 18 verschiedene Verschaltungsarten für die Phasenwicklungen 120 bis 124 untereinander und mit einer Gleichrichterschaltung vorgesehen. Gemäß Figur 21a ist eine sogenannte Drudenfußschaltung (fünfphasige Pentagrammschaltung bzw. Schaltung als fünfzackiger Stern) vorgesehen, gemäß 21b eine fünfphasige Sternschaltung und gemäß Figur 21c eine fünfphasige Pentagonschaltung bzw. fünfphasige Ringschaltung.

Die Ständerwicklung 18 der elektrischen Maschine 10 soll mit n Phasenwicklungen 120, 121, 122, 123, 124 ausgestattet sein, wobei zumindest eine Phasenwicklung 120, 121, 122, 123, 124 nach einem der zuvor beschriebenen Ausführungsbeispiele hergestellt sein soll.

Es ist ein Stator 16 für eine elektrische Maschine 10 vorgesehen, wobei dieser ein Ständereisen 17 aufweist und das Ständereisen 17 eine im wesentlichen zentrale Öffnung 184 hat, mit Nuten 158 und Zähnen 170 im Ständereisen 17, die nach radial innen zur zentralen Öffnung 184 hin geöffnet sind, mit einer Ständerwicklung 18 mit mehreren Phasenwicklungen 120, 121, 122, 123, 124 einer bestimmten Anzahl n, wobei Abschnitte einer Phasenwicklung 120, 121, 122, 123, 124 in mehreren Nuten 158 angeordnet und dabei Spulen 82 mit Spulenseiten 88 in mehreren Nuten 158 angeordnet sind, wobei mehrere Spulenseiten 88 einer Spule 82 mit mehreren Windungen 85 aufeinander gestapelt in einer Nut eingelegt sind und mehrere andere Spulenseiten 88 der Spule 82 in einer anderen Nut 158 eingelegt und gestapelt sind, wobei eine Ständerwicklung 18 wie beschrieben in den Nuten des Stators 16 sitzt.

Alternativ kann der Stator auch wie folgt beschrieben werden: Es ist ein Stator 16 für eine elektrische Maschine 10 vorgesehen, wobei dieser ein Ständereisen 17 aufweist und das Ständereisen 17 eine im wesentlichen zentrale Öffnung 184 hat, mit Nuten 158 und Zähnen 170 im Ständereisen 17, die nach radial innen zur zentralen Öffnung 184 hin geöffnet sind, mit einer Ständerwicklung 18 mit mehreren Phasenwicklungen 120, 121, 122, 123, 124 einer bestimmten Anzahl n, wobei Abschnitte einer Phasenwicklung 120, 121, 122, 123, 124 in mehreren Nuten 158 angeordnet und dabei Spulen 82 mit Spulenseiten 88 in mehreren Nuten 158 angeordnet sind, wobei mehrere Spulenseiten 88 einer Spule 82 mit mehreren Windungen 85 aufeinander gestapelt in einer Nut eingelegt sind und mehrere andere Spulenseiten 88 der Spule 82 in einer anderen Nut 158 eingelegt und gestapelt sind, wobei die Phasenwicklung 120, 121, 122, 123, 124 mehrere solche Spulen 88.1, 88.2 hat, die direkt nacheinander miteinander einstückig verbundenen sind, wobei zwei direkt nacheinander miteinander einstückig verbundene Spulen 82.1, 82.2 an einem Innenumfang des Ständereisens 17 durch einen einschichtigen Spulenverbinder 94.1 miteinander verbunden sind und zwei direkt nacheinander miteinander einstückig verbundene Spulen 82.2, 82.3 an einem Außenumfang des Ständereisens 17 durch einen einschichtigen Spulenverbinder 94.2 miteinander verbunden sind.

Bevorzugt sollen die Phasenwicklungen 120 bis 124 eine Leiterzahl z/Nut von sechs aufweisen, der Drahtdurchmesser soll dabei d = 1,95 mm, die Isolation soll mit dem Grad 2 ausgeführt sein. Der Draht hat dabei ursprünglich einen runden Querschnitt und wird auf eine seiner Nutlage entsprechende Nutform bzw. Nutformabschnitt verprägt. Der Füllfaktor, d. h. das Verhältnis der in einer Nut befindlichen Drahtquerschnitte incl. Drahtisolation (Lack, Harz) zu Nutquerschnitt (Eisen) soll kleiner 75 % sein.

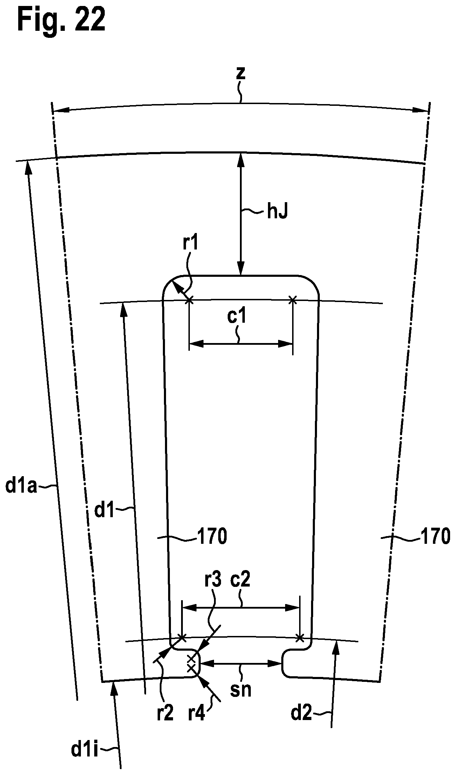

Gemäß Figur 22 soll ein Nutquerschnitt wie folgt dimensioniert sein:
d1a = 140mm, d1i = 106mm, die axiale Länge le (in Drehachsenrichtung des Läufers) soll 37mm betragen. Die Gesamtzahl der Nuten 158 soll 80 sein. In einer besonderen Ausführung soll der Bogen z für 79 Nuten ca. 4,51° aufweisen. Die Durchmesser d1 und d2 sollen 131,3 mm bzw. 108 mm sein. Die symmetrisch aufgebaute Nut 158 weist die Mittenabstände c1 und c2 auf, die 2,2 bzw. 1,6 mm betragen. Von diesen Mittenabständen, d. h. von den jeweiligen Endpunkten der beiden angegebenen Längen gehen Radien r1 und r2 aus, die jeweils 0,3 mm betragen. Der Nutschlitz weist eine Breite von 1,45 mm auf. Der Nutschlitz ist auf der zur Nut 158 gerichteten Seite mit r3 = 0,3 mm abgerundet; zum Innendurchmesser hin ist der Nutschlitz mit r4 = 0,3 mm abgerundet. Die maximale Breite eines Zahns beträgt am Zahnkopf 2,04 mm. Die Nutteilung Tau1 beträgt am Nutgrund 5,16 mm, während die Nutteilung Tau2 am Zahnkopf 4,24 mm beträgt. Die Zahnbreite beträgt in der Nähe des Nutgrunds bz1 = 2,36 mm. Die Zahnbreite in der Nähe des Nutgrunds ist senkrecht zur radialen Richtung von der Mitte des Zahnes aus an der Stelle gemessen, an der der Zahn mit r2 in die Krümmung des Zahnkopfes übergeht. Die Jochhöhe hJ beträgt 4,05 mm. Es ergeben sich damit für die Kupferfläche (Leiter ohne jede Isolation) eine Fläche von 17,9 mm2 bei einer Nutfläche von 30,5mm2. Es wird damit ein Kupferfüllfaktor von 58,8 erreicht.

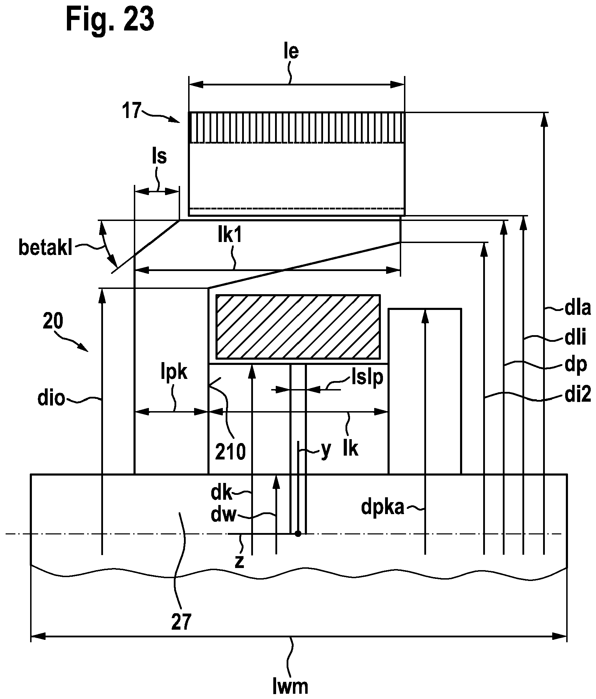

Fig. 23 zeigt einen schematischen Längsschnitt durch das Ständereisen 17 und den Rotor 20. Der Außendurchmesser dp soll 105,3 mm betragen, der Durchmesser der Welle 27 soll 17 mm sein. Die Polzahl, d. h. die Anzahl der Klauen soll sechzehn betragen. Die weiteren angegeben Größen sind der Polkerndurchmesser dk, die Polkernlänge Ik, die Platinendicke Ipk eines Klauenpols, eine Anfasung, die einerseits durch den Winkel betakl und die Länge ls bestimmt ist, der Innendurchmesser di2 an der Klauenspitze, der Durchmesser dpka im Zwischenraum zwischen zwei Klauenpolen, sowie ein Durchmesser an der theoretischen Schnittstelle der Unterseite des Klauenpols mit der inneren Stirnfläche 210 einer Platine.

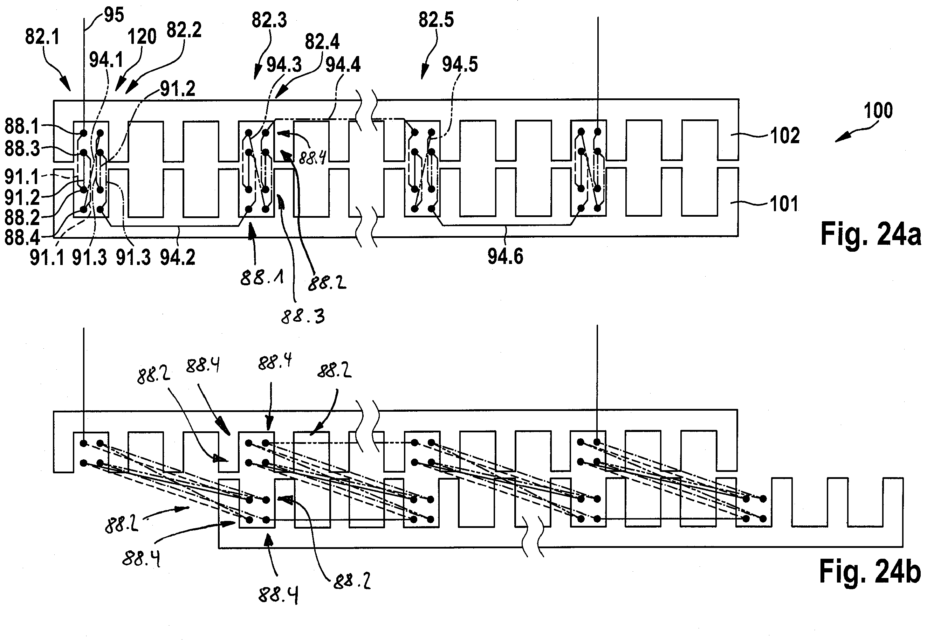

Ein Teil der zuvor beschriebenen Arbeitsschritte findet prinzipiell Anwendung auf die nachfolgend beschriebenen Ausführungsbeispiele. Dies gilt beispielsweise für die Schritte nach Figur 2, Figur 3, Figur 4a und Figur 4b. Von der in Figur 4a und 4b dargestellten Konfiguration wird ausgegangen. So werden nachfolgend die erste Spule 82.1 und die zweite Spule 82.2 so aufeinander gelegt, dass diese den gleichen Wicklungssinn aufweisen. Der Spulenverbinder 94.1 wird um 180° in Richtung zu den Spulenseitenverbindern 91.2 und 91.4 geklappt. Des Weiteren werden die dort nicht näher bezeichneten Spulenseiten 88.1 bis 88.6 der Spule 82.1 quasi unter die Spulenseiten 88.1 bis 88.6 der Spule 82.1 geschoben. Analog das Gleiche passiert mit den Spulen 82.3 und 82.4 sowie den Spulenverbinder 94.3. Die in Figur 24a dargestellte Variante einer Phasenwicklung 120 weist je Spule 82 zwei Windungen auf. Ein Phasenanschluss 95 führt zu der ersten Spule 82.1, die parallel zu der zweiten Spule 82.2.positioniert ist. Beide Spulen sitzen nebeneinander im Umformwerkzeug 100 und dort in zwei Nuten 105 und 106 im Unterteil 101 und Oberteil 102. Beide Spulen 82.1 und 82.2 sind durch einen Spulenverbinder 94.1 miteinander einstückig verbunden. Der Spulenverbinder 94.1 verläuft nur im Bereich dieses Paars aus den Spulen 82.1 und 82.2 in den Nuten 105 und 106, die sich im Umformwerkzeug direkt gegenüber stehen. In der Seitenansicht nach Figur 24a sind bei der Spule 82.1 die Spulenseitenverbinder 91.1, 91.2 und 91.3 erkennbar. Die Spulenseiten 88.1, 88.2, 88.3 und 88.4 sind als Punkte erkennbar. Analog das gleiche gilt für die Spule 82.2.

Im Umformwerkzeug 100 bzw. in dem Unterteil 101 und Oberteil 102 und einander gegenüberstehenden Nuten 105 und 106 befinden sich demgemäß zwei Spulen 82.1 und 82.2. Die erste Spulenseite 88.1 der Spule 82.1 ist dabei neben der ersten Spulenseite 88.1 der Spule 82.2 angeordnet. Die zweite Spulenseite 88.2 der Spule 82.1 ist dabei neben der zweiten Spulenseite 88.2 der Spule 82.2 angeordnet. Die dritte Spulenseite 88.3 der Spule 82.1 ist dabei neben der dritten Spulenseite 88.3 der Spule 82.2 angeordnet. Die vierte Spulenseite 88.4 der Spule 82.1 ist dabei neben der vierten Spulenseite 88.4 der Spule 82.2 angeordnet. Analog dazu ist die Anordnung der Spulen 82.3 und 82.4 untereinander und in deren einander gegenüberstehenden Nuten 105 und 106 sowie der Spulen 82.5 und 82.6 untereinander und in deren einander gegenüberstehenden Nuten 105 und 106 und so weiter.

Beide Spulen 82.1 und 82.2 sind durch den Spulenverbinder 94.1 verbunden. Der Spulenverbinder 94.2 verbindet die Spule 82.2 mit der Spule 82.3. Der weitere Aufbau der Phasenwicklung 120 ist analog. Die Spulenverbinder 94.1, 94.2, 94.3, 94.4, 94.5, 94.6 usw. befinden sich in Richtung der Nuten 105 und 106 betrachtet (Spulenseitenlängsrichtung) auf der gleichen Seite des Umformwerkzeugs 100.

Das weitere Paar von Spulen 82.3 und 82.4 hat untereinander genau den gleichen, in Bezug zu den Spulen 82.1 und 82.2 jedoch umgekehrten Wicklungssinn im Umformwerkzeug 100. Das erste Paar Spulen 88.1 und 82.2 und das zweite Paar Spulen 82.3 und 82.4 sind durch den Spulenverbinder 94.2 zwischen den Spulen 82.3 und 82.2 verbunden. Von der Spule 82.4 geht nach deren letzter Windung ein weiterer Spulenverbinder 94.4 ab, der die Spule 82.4 mit der Spule 82.5 verbindet. Eine solche Gruppe aus den vier Spulen 82.1 bis 82.4 und deren Spulenverbindern 94.1 bis 94.4 deckt zwei Pole ab. Werden beispielsweise 16 Pole erforderlich, so sind 8 solche Gruppen erforderlich. Analog dazu beispielsweise bei 12 Polen 6 solche Gruppen. Man benötigt somit immer ein Vielfaches solcher Gruppen je Phasenwicklung, unabhängig von der Anzahl der verwendeten Phasen.

In einer Anordnung von Phasenwicklungen 120, 121 und 122 für einen dreiphasigen Ständer folgen zwei weitere Phasenwicklungen 121 und 122 auf die Phasenwicklung 120, so dass die Nutpaare nach den eben beschriebenen Nutpaaren ebenfalls mit einer Phasenwicklung 121 und 122 besetzt sind.

In Figur 24b ist das Umformwerkzeug 100 nach dem Schränken und damit nach dem Verschieben von Unterteil 101 und Oberteil 102 zueinander dargestellt. Die Relativverschiebung beträgt drei Nuten 105 bzw. 106 und läuft wie beim Ausführungsbeispiel nach Figur 8a und 8b ab. Spulenseiten der Spulen 82.3 und 83.4 werden über Spulenseiten der Spulen 82.1 und 82.2 geschoben. Im Beispiel sind dabei die Spulenseiten 88.4, 88.2 der Spule 82.3 und die Spulenseiten 88.2 und 88.4 der Spule 82.1 in einer Linie in der genannten Reihenfolge übereinander angeordnet. Analog dazu sind die Spulenseiten 88.4 und 88.2 der Spule 82.4 und die Spulenseiten 88.2 und 88.4 der Spule 82.2 in einer Linie in der genannten Reihenfolge übereinander angeordnet. Nach dem Schränken liegen somit eine Spulenseite 88.2 (der Spule 82.1), die dem Phasenanschluss 95 vom elektrischen Pfad betrachtet am nächsten liegt und die letzte Spulenseite 88.4 (der Spule 82.4), die in eine andere Paarung von Nuten 105 bzw. 106 führt - also die Spulenseite 88.4, die dem Phasenanschluss 95 am weitesten entfernt ist, zwei Spulenseitenlagen auseinander. Zu dem liegen diese beiden Spulenseiten nicht in einer Linie. Verallgemeinert bedeutet dies, dass nach dem Schränken somit eine Spulenseite 88.2 (der Spule 82.1), die dem Phasenanschluss 95 vom elektrischen Pfad betrachtet am nächsten liegt und die letzte Spulenseite 88.4 (der Spule 82.4), die in eine andere Paarung von Nuten 105 bzw. 106 führt - also die Spulenseite 88.4, die dem Phasenanschluss 95 am weitesten entfernt ist, eine Anzahl an Spulenseitenlagen auseinander, die der Anzahl an Spulenwindungen je Spule 82 entspricht. Da die Spulenseiten einer solchen Paarung von Nuten 105 bzw. 106 später auch genauso in einer Nut eines Stator zu liegen kommt, gelten diese Aussagen bzgl. der Lage nach dem Schränken auch für die Nuten in einem Stator bzw. Ständereisen. Des Weiteren sind in einer solchen Paarung einer Nut 105 und 106 auch eine Spulenseite 88.4 (der Spule 82.2) und eine Spulenseite 88.4 (der Spule 82.4) angeordnet, die mit einem Spulenverbinder 94.2 bzw. 94.4 unmittelbar verbunden sind und die jeweils zu einer Spulenseite 88.1 (der Spule 82.1) bzw. einer Spulenseite 88.1 (der Spule 82.5) unmittelbar verbinden. Der Spulenverbinder 94.2 ist zudem derart angeordnet, dass der Spulenverbinder 94.2 nur innerhalb einer Nutlage zwei Spulen 82.2 und 82.3 verbindet, s. a. Figur 24a und 24b. Analog dazu ist der Spulenverbinder 94.4 zudem derart angeordnet, dass der Spulenverbinder 94.4 nur innerhalb einer Nutlage zwei Spulen 82.4 und 82.5 verbindet, s. a. Figur 24a und 24b. "Gleiche Nutlage" bedeutet, dass die Position bezogen auf die Tiefe der Nut 105 bzw. 106 die gleiche ist. Legt man die Anordnung gemäß Figur 24b in ein Ständereisen 17 und biegt dieses rund, so liegen die eben erwähnten Spulenverbinder 94.4 und 94.2 mit ihren Anfängen und Ende in einer radialen Linie übereinander, so dass die Spulenverbinder 94.4 und 94.2 genau - wenn auch beabstandet - übereinander liegen.

Es ist somit ein Verfahren zur Herstellung einer Ständerwicklung 18 einer elektrischen Maschine 10 offenbart, insbesondere eines Wechselstromgenerators, wobei die Ständerwicklung 18 zumindest n Phasenwicklungen 120, 121, 122, 123, 124 aufweist und eine Phasenwicklung 120, 121, 122, 123, 124 mehrere aufeinander folgende gewickelte Spulen 82 mit Spulenseiten 88 und Spulenseitenverbindern 91 hat, wobei sich die Spulen 82 in erste Spulen 82.1 und zweite Spulen 82.2 aufteilen, mit einem Umformwerkzeug 100, in welchem Nuten 105, 106 vorhanden sind, die geeignet sind die Spulen 82 aufzunehmen, wobei eine erste Spule 82.1 in einer Nut 105 und eine zweite Spule 82.2 in der selben Nut 105 angeordnet ist.

Es ist eine Konfiguration vorgesehen (Figur 24a, 24b), in der eine dreiphasige Wicklung bevorzugt wird. Die Wicklung ist 16-polig ausgeführt, die Spulenseiten sind zweireihig. Pro Nut sind acht Spulenseiten vorgesehen.

Eine elektrische Maschine, insbesondere Wechselstromgenerator, wiese somit einen Rotor 20 und einen Stator 16 auf, wobei der Stator 16 ein Ständereisen 17 hätte, mit Nuten 158, wobei in den Nuten 158 eine Ständerwicklung 18 mit einer Mehrzahl an Phasenwicklungen 121, 122, 123, 124, 125 angeordnet ist, wobei eine Phasenwicklung 121, 122, 123, 124, 125 mehrere Spulen 82.1, 82.2, 82.3, 82.4 aufweist und derart in den Nuten 158 angeordnet ist, dass Spulenseiten 88.4, 88.2 der Spule 82.3 und Spulenseiten 88.2 und 88.4 der Spule 82.1 in einer Linie und vorzugsweise in dieser Reihenfolge übereinander angeordnet sind. Die Spule 82.3 hat dabei eine Spulenseite 88.2, die die zweite gewickelte Spulenseite 88.2 der Spule 82.3 ist. Analog dazu ist die Spulenseite 88.4 die die vierte gewickelte Spulenseite 88.4 der Spule 82.3. Die Spule 82.1 hat dabei eine Spulenseite 88.2 die die zweite gewickelte Spulenseite 88.2 der Spule 82.1 ist. Analog dazu ist die Spulenseite 88.4 die vierte gewickelte Spulenseite 88.4 der Spule 82.1.

Alternativ zu oder in Kombination mit der unmittelbar zuvor beschriebenen Maschine kann eine Maschine auch so beschrieben werden:
Eine elektrische Maschine, insbesondere Wechselstromgenerator, wiese somit einen Rotor 20 und einen Stator 16, wobei der Stator 16 ein Ständereisen 17 hätte, mit Nuten 158, wobei in den Nuten 158 eine Ständerwicklung 18 mit einer Mehrzahl an Phasenwicklungen 121, 122, 123, 124, 125 angeordnet ist, wobei eine Phasenwicklung 121, 122, 123, 124, 125 mehrere Spulen 82.1, 82.2, 82.3, 82.4 aufweist und derart in den Nuten 158 angeordnet ist, dass eine Spulenseite 88.2 (der Spule 82.1), die dem Phasenanschluss 95 vom elektrischen Pfad her betrachtet am nächsten liegt und eine letzte Spulenseite 88.4 (der Spule 82.4, d. h. der übernächsten in Bezug zur Spule 82.1) in einer Nut 158 sind, wobei die Spulenseite 88.4 in eine andere Nut 158 führt, also die Spulenseite 88.4, die dem Phasenanschluss 95 am weitesten entfernt ist, zwei Spulenseitenlagen auseinander sind. Zu dem liegen diese beiden Spulenseiten nicht in einer Linie. Verallgemeinert bedeutet dies, dass nach dem Schränken somit eine Spulenseite 88.2 (der Spule 82.1), die dem Phasenanschluss 95 vom elektrischen Pfad betrachtet am nächsten liegt und die letzte Spulenseite 88.4 (der Spule 82.4), die in eine andere Paarung von Nuten 105 bzw. 106 bzw. eine andre Nut 158 führt - also die Spulenseite 88.4, die dem Phasenanschluss 95 am weitesten entfernt ist, eine Anzahl an Spulenseitenlagen auseinander liegen, die der Anzahl an Spulenwindungen je Spule 82 entspricht. Da die Spulenseiten einer solchen Paarung von Nuten 105 bzw. 106 später auch genauso in einer Nut eines Stator zu liegen kommt, gelten diese Aussagen bzgl. der Lage nach dem Schränken auch für die Nuten in einem Stator bzw. Ständereisen. Des Weiteren sind in einer solchen Nut 158 auch eine Spulenseite 88.4 (der Spule 82.2) und eine Spulenseite 88.4 (der Spule 82.4) angeordnet, die mit einem Spulenverbinder 94.2 bzw. 94.4 unmittelbar verbunden sind und die jeweils zu einer Spulenseite 88.1 (der Spule 82.1) bzw. einer Spulenseite 88.1 (der Spule 82.5) unmittelbar verbinden. Der Spulenverbinder 94.2 ist zudem derart angeordnet, dass der Spulenverbinder 94.2 nur innerhalb einer Nutlage zwei Spulen 82.2 und 82.3 verbindet. Analog dazu ist der Spulenverbinder 94.4 zudem derart angeordnet, dass der Spulenverbinder 94.4 nur innerhalb einer Nutlage zwei Spulen 82.4 und 82.5 verbindet. "Gleiche Nutlage" bedeutet, dass die Position bezogen auf die Tiefe der Nut 158 die gleiche ist.

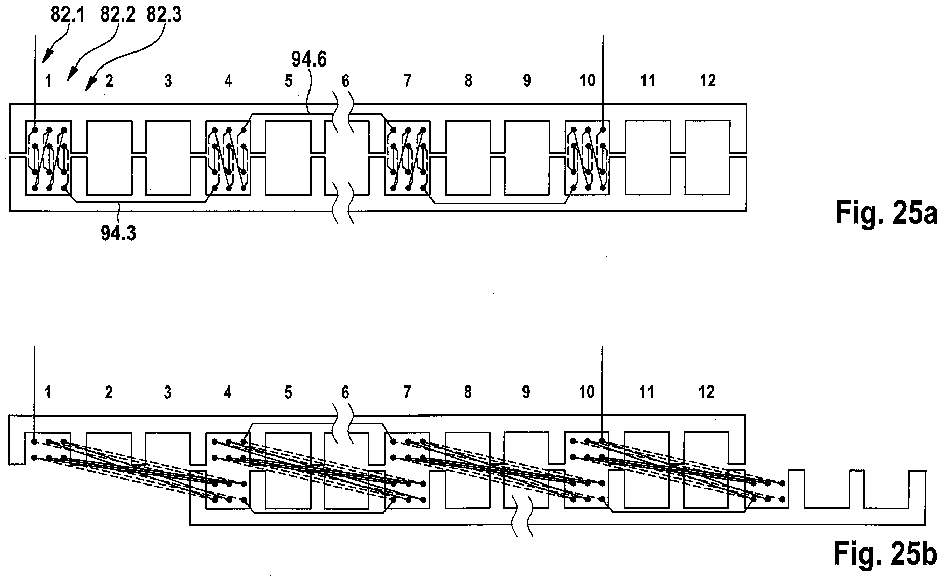

Wie dem analogen Ausführungsbeispiel nach Figur 25a und 25b entnommen werden kann, können in einer Nut 105, 106 mehr als zwei Spulen 82 - hier drei - angeordnet sein. Auch hier sind die Spulen 82.1 bis 82.3 gleichsinnig gewickelt angeordnet.

Es ist eine Konfiguration vorgesehen (Figur 25a, 25b), in der eine dreiphasige Wicklung bevorzugt wird. Die Wicklung ist 16-polig ausgeführt, die Spulenseiten sind dreireihig. Pro Nut sind zwölf Spulenseiten vorgesehen.

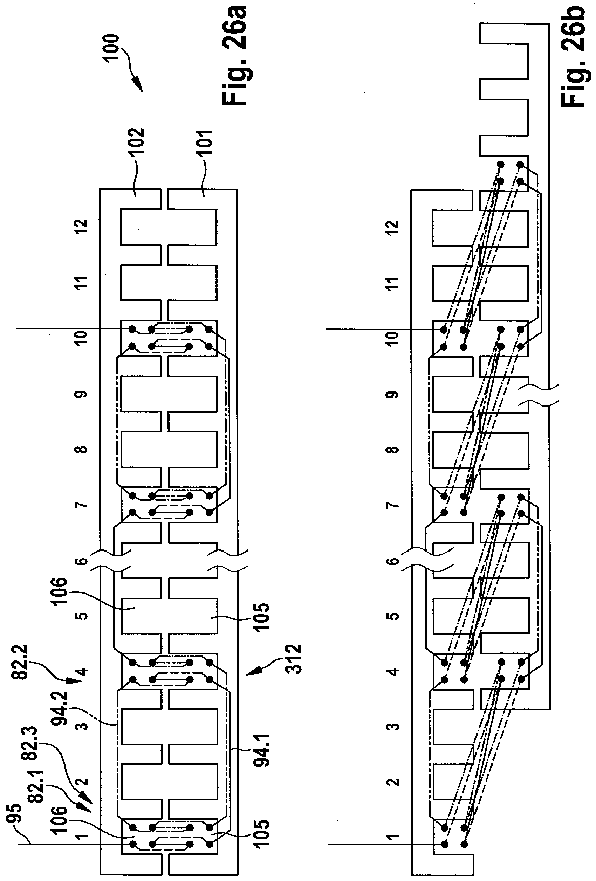

Im Ausführungsbeispiel nach Figur 26a und 26b sind zwar ebenfalls zwei Spulen 82.1 und 82.3 in einer Nut 105, 106 angeordnet. Zwischen diese beiden Spulen 82.1 und 82.3 befindet sich jedoch elektrisch eine weitere Spule 82.2. Es ist somit auch mindestens eine Spule 82.2 vorhanden, die in einer Nut angeordnet ist, und die mittels Spulenverbindern 94.1 und 94.2 mit Spulen 82.1 und 82.3 elektrisch verbunden ist, die in einer Nut 105, 106 gemeinsam angeordnet sind. Die Spulenverbinder 94.1 und 94.2 befinden sich dabei näher an einem Nutgrund als an einer Nutöffnung der jeweiligen verbundenen Nut 105 bzw. 106.

Der gleiche Sachverhalt trifft auch auf eine andere Spule 82.3 zu. Im Ausführungsbeispiel nach Figur 26a und 26b sind ebenfalls zwei Spulen 82.2 und 82.4 in einer Nut 105, 106 angeordnet. Zwischen diese beiden Spulen 82.2 und 82.4 befindet sich jedoch elektrisch eine weitere Spule 82.3. Es ist somit auch mindestens eine Spule 82.3 vorhanden, die in einer Nut angeordnet ist, und die mittels Spulenverbindern 94.2 und 94.3 mit Spulen 82.2 und 82.4 elektrisch verbunden ist, die in einer Nut 105, 106 gemeinsam angeordnet sind. Die Spulenverbinder 94.2 und 94.3 befinden sich dabei näher an einem Nutgrund als an einer Nutöffnung der jeweiligen verbundenen Nut 105 bzw. 106.

Es ist eine Konfiguration vorgesehen (Figur 26a, 26b), in der eine dreiphasige Wicklung bevorzugt wird. Die Wicklung ist 16-polig ausgeführt, die Spulenseiten sind zweireihig. Pro Nut sind acht Spulenseiten vorgesehen.

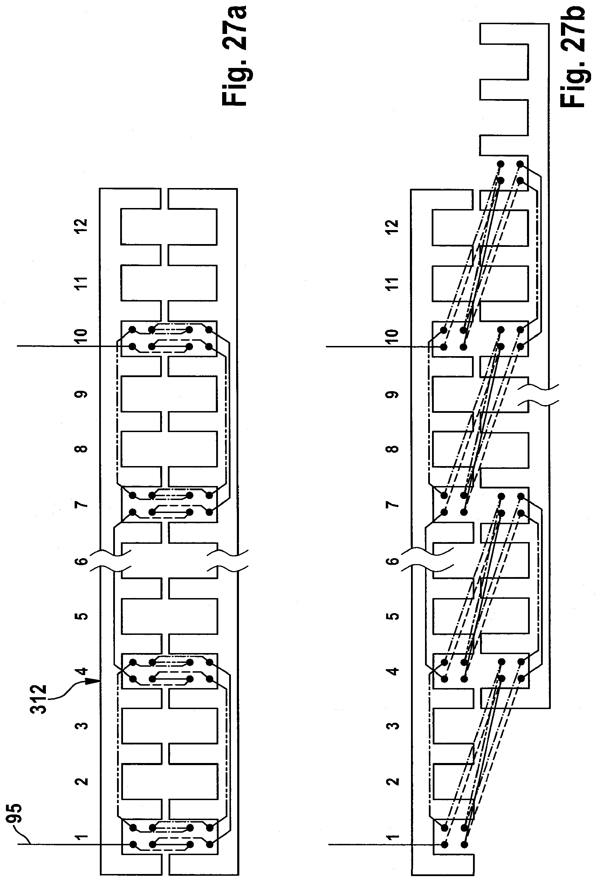

Der Sachverhalt zur Figur 26a und 26b trifft auch auf das Ausführungsbeispiel nach Figur 27a und 27b zu. Während beim Ausführungsbeispiel nach Figur 26a und 26b sich kreuzende Spulenverbinder 94.1 und 94.3 sich auf der Seite der Wicklung befinden, die sich gegenüber dem Phasenanschluss 95 befinden, ist die Situation in Figur 27a und 27b genau anders: der Phasenanschluss 95 ist auf der Seite der Drahtkreuzung 312.

Es ist eine Konfiguration vorgesehen (Figur 27a, 27b), in der eine dreiphasige Wicklung bevorzugt wird. Die Wicklung ist 16-polig ausgeführt, die Spulenseiten sind zweireihig. Pro Nut sind acht Spulenseiten vorgesehen.

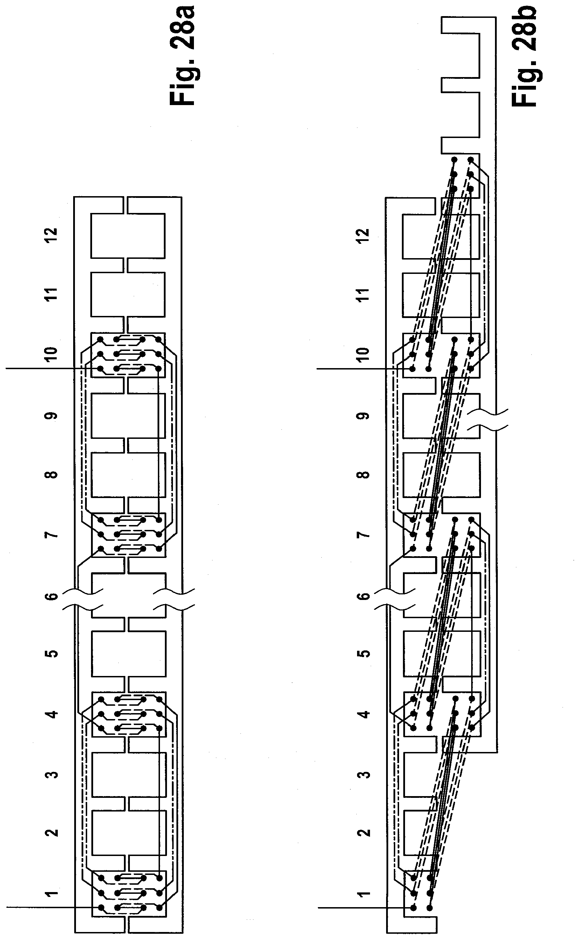

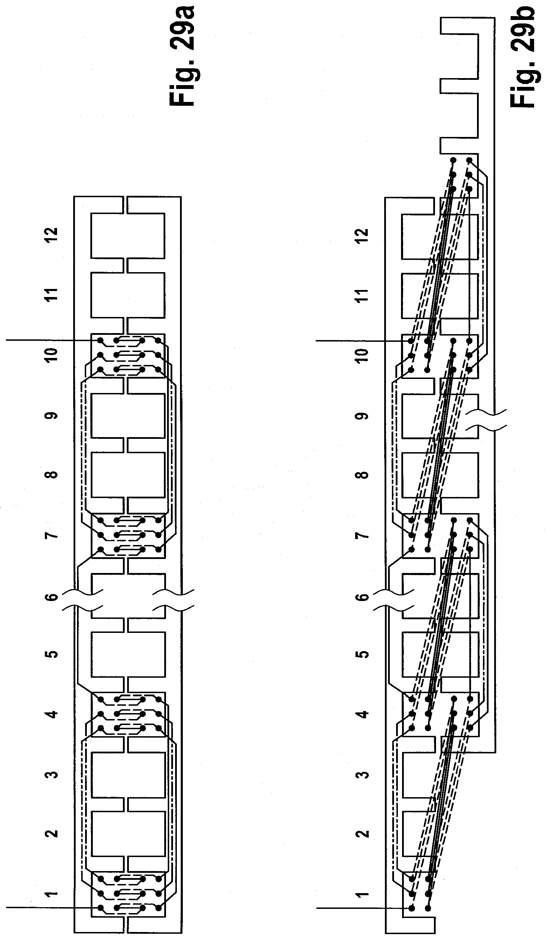

Die Ausführungsbeispiele nach den Figuren 28a und 28b sowie 29a und 29b sind Weiterentwicklungen der Ausführungsbeispiele nach Figur 27a und 27b bzw. 26a und 26b.

Es ist eine Konfiguration vorgesehen (Figur 28a, 28b; Figur 29a, 29b), in der eine dreiphasige Wicklung bevorzugt wird. Die Wicklung ist 16-polig ausgeführt, die Spulenseiten sind dreireihig. Pro Nut sind zwölf Spulenseiten vorgesehen.

Für die Ausführungsbeispiele nach den Figuren 26a bis 29b gelten zum Beispiel die Definitionen, wonach mindestens zwei Spulen 82 durch einen Spulenverbinder 94 miteinander verbunden sind, der eine der zwei Spulen 82 in einer Nut 105, 106 mit einer weiteren Spule 82 in einer anderen Nut 105; 106 verbindet. Es gilt auch, dass im Umformwerkzeug 100 die weitere Spule 82 elektrisch so angeordnet ist, dass zwischen dieser Spule 82 und der ersten Spule 82 eine Spule 82 oder zwei Spulen 82 oder mehr Spulen 82 angeordnet sind.

Gemäß den Ausführungsbeispielen nach den Figuren 26a bis 29b kreuzen sich Spulenverbinder 94 innerhalb einer Phasenwicklung 120, 121, 122.

Zwischen der ersten Spule 82.1 und der weiteren Spule 82.2 sind n-1 Nuten 105, 106 angeordnet.

Die in den Figuren 24a bis 29b eingezeichneten Unterbrechungslinien bedeuten, dass das Ständereisen 17 mit sehr unterschiedlichen Nutzahlen ausgeführt werden kann. Die Nutzahl ist nicht auf die Zahl 12 beschränkt.

Es können einzelnen Reihen der Spulenseiten verprägt werden. Ein trapezförmiger Querschnitt einer Reihe ist möglich. Das dargestellte System lässt sich ohne Weiteres auf beliebige Phasen-, Nut- und Polzahlen übertragen. Für den Wickelkopf ist Runddrahtquerschnitt bevorzugt, in der Nut soll der Draht geprägt sein (umgeformter Runddraht). Die Drähte sollen mit Backlack oder sonstigem Klebstoff verbunden sein. Eine Isolation der einzelnen Reihen ist möglich. Hierzu können diese mit Isolationspapier umgeben oder die Isolation nur über eine Isolation der Nut ermöglicht sein. Hierzu werden alle Reihen mit flächigem Isolationsstoff umgeben.

Es ist darüber hinaus vorteilhaft, wenn das Verhältnis aus Breite der Nut und deren für Spulenseiten nutzbarer Höhe kleiner gleich dem Quotient aus dem Quadrat der Reihen pro Nut und der Anzahl der Spulenseiten pro Nut ist.

## Patentansprüche

1. Verfahren zur Herstellung einer Ständerwicklung (18) einer elektrischen Maschine (10), insbesondere eines Wechselstromgenerators, wobei die Ständerwicklung (18) zumindest n Phasenwicklungen (120, 121, 122, 123, 124) aufweist und eine Phasenwicklung (120, 121, 122, 123, 124) mehrere aufeinanderfolgende einstückig verkettete gewickelte Spulen (82) mit Spulenseiten (88) und Spulenseitenverbindern (91) hat, wobei sich die Spulen (82) in erste Spulen (82.1) und zweite Spulen (82.2) aufteilen,
wobei ein Prägen der Spulenseiten (88) der Phasenwicklungen (120, 121, 122, 123, 124) durchgeführt wird, im Zuge dessen Drähte mit einem ursprünglich runden Querschnitt derartig verformt werden, so dass eine Gesamtheit von Spulenseiten (88), die für eine Nut (158) eines Ständereisens (17) vorgesehen ist, nach dem Prägen eine gesamte radiale Erstreckung mit einer Höhe (h2) aufweist, die größer ist als eine Summe (h1) der Drahtdurchmesser der unverprägten Spulenseiten (88.1 - 88.5),
wobei die Drähte in Wickelkopfbereichen (152) der elektrischen Maschine (10) unverprägt bleiben und ihren runden Querschnitt beibehalten,
wobei ein Schränken der Phasenwicklungen (120, 121, 122, 123, 124) mit einem Umformwerkzeug (100) durchgeführt wird, in welchem Nuten (105, 106) vorhanden sind, die geeignet sind, die Spulen (82) aufzunehmen, wobei eine erste Spule (82.1) in einer Nut (105) und eine zweite Spule (82.2) neben der ersten Spule (82.1) in derselben Nut (105) angeordnet ist.

2. Verfahren nach Anspruch 1 , **dadurch gekennzeichnet, dass** in einer Nut (105) mehr als zwei Spulen (82) angeordnet sind.

3. Verfahren nach Anspruch 1 oder 2, **dadurch gekennzeichnet, dass** die mindestens zwei Spulen (82) in einer Nut (105) durch einen Spulenverbinder (94) miteinander verbunden sind, der eine der mindestens zwei Spulen (82) in einer Nut (105, 106) mit einer weiteren Spule (82) in einer anderen Nut (105; 106) verbindet.

4. Verfahren nach Anspruch 3, **dadurch gekennzeichnet, dass** im Umformwerkzeug (100) die weitere Spule (82) so angeordnet ist, dass elektrisch zwischen dieser Spule (82) und der ersten Spule (82) eine Spule (82) oder zwei Spulen (82) oder mehr Spulen (82) angeordnet sind.

5. Verfahren nach einem der Ansprüche 1 bis 4, **dadurch gekennzeichnet, dass** sich Spulenverbinder (94) innerhalb einer Phasenwicklung (120, 121 , 122) kreuzen.

6. Verfahren nach Anspruch 1 oder 2, **dadurch gekennzeichnet, dass** in einer Nut (105) die erste Spule (82.1) und die zweite Spule (82.2) durch einen Spulenverbinder (94.1) miteinander und direkt nacheinander einstückig verbunden sind.

## Claims

1. A method for producing a stator winding (18) of an electrical machine (10), in particular an AC generator, wherein the stator winding (18) has at least n phase windings (120, 121, 122, 123, 124) and a phase winding (120, 121, 122, 123, 124) has a plurality of consecutive, interlinked, wound coils (82) having coil sides (88) and coil side connectors (91), wherein the coils (82) are divided into first coils (82.1) and second coils (82.2),
wherein the coil sides (88) of the phase windings (120, 121, 122, 123, 124) are embossed, in the course of which wires having an originally round cross section are deformed in such a way such that a set of coil sides (88) provided for a groove (158) of a stator iron (17) has, after embossing, a total radial extent with a height (h2) greater than a sum (h1) of the wire diameter of unembossed coil sides (88.1 - 88.5),
wherein the wires remain unembossed in winding head areas (152) of the electric machine (10) and keep their round cross-section,
wherein the phase windings (120, 121, 122, 123, 124) are interlocked with a forming tool (100), in which grooves (105, 106) are provided, which are adapted to receive the coils (82), wherein a first coil (82.1) is provided in a groove (105) and a second coil (82.2) next to the first coil (82.1) in the same groove (105).

2. A method according to claim 1, **characterised in that** more than two coils (82) are arranged in a groove (105).

3. A method according to claim 1 or 2, **characterised in that** said at least two coils (82) are interconnected in a groove (105) by a coil connector (94), which connects one of said at least two coils (82) in a groove (105, 106) with another coil (82) in another groove (105, 106).

4. A method according to claim 3, **characterised in that** the additional coil (82) is arranged in the forming tool (100) so that one coil (82) or two coils (82) or more coils (82) are arranged electrically between this coil (82) and the first coil (82).

5. A method according to any one of claims 1 to 4, **characterised in that** coil connectors (94) intersect within a phase winding (120,121, 122).

6. A method according to claim 1 or 2, **characterised in that** in a groove (105), the first coil (82.1) and the second coil (82.2) are connected to each other and directly successively in one piece, by a coil connector (94.1).

## Revendications

1. Procédé pour fabriquer un enroulement de stator (18) d'une machine électrique (10), en particulier d'un alternateur, dans lequel l'enroulement de stator (18) comporte au moins n enroulements de phase (120, 121, 122, 123, 124) et un enroulement de phase (120, 121, 122, 123, 124) a plusieurs bobines (82) enroulées de manière consécutive et solidaire, avec des côtés de bobine (88) et des connecteurs de côté de bobine (91), dans lequel les bobines (82) sont divisées en des premières bobines (82.1) et des secondes bobines (82.2),
dans lequel un estampage des côtés de bobine (88) des enroulements de phase (120, 121, 122, 123, 124) est réalisé, au cours duquel des fils ayant une section transversale initialement ronde sont déformés de telle sorte que la totalité des côtés de bobine (88) qui sont prévus pour une rainure (158) d'un entrefer de stator (17) a, après l'estampage, une extension radiale totale ayant une hauteur (h2) qui est supérieure à une somme (h1) du diamètre de fil des côtés de bobine (88.1 à 88.5) non estampés,
dans lequel les fils situés dans des zones de tête d'enroulement (152) de la machine électrique (10) restent non estampés et conservent leur section transversale ronde, dans lequel une délimitation des enroulements de phase (120, 121, 122, 123, 124) est réalisée à l'aide d'un outil de conformation (100), dans lequel il existe des rainures (105, 106) adaptées pour recevoir les bobines (82), dans lequel une première bobine (82.1) est agencée dans une première rainure (105) et une seconde bobine (82.2) est agencée à côté de la première bobine (82.1) dans la même rainure (105) .

2. Procédé selon la revendication 1, **caractérisé en ce que** plus de deux bobines (82) sont agencées dans une rainure (105) .

3. Procédé selon la revendication 1 ou 2, **caractérisé en ce que** les au moins deux bobines (82) dans une rainure (105) sont reliées l'une à l'autre par un connecteur de bobine (94) qui relie l'une des au moins deux bobines (82) dans une rainure (105, 106) à une bobine supplémentaire (82) dans une autre rainure (105, 106).

4. Procédé selon la revendication 3, **caractérisé en ce que** dans l'outil de conformation (100), la bobine supplémentaire (82) est agencée de telle sorte qu'une bobine (82) ou deux bobines (82) ou plusieurs bobines (82) sont agencées électriquement entre cette bobine (82) et la première bobine (82).

5. Procédé selon l'une des revendications 1 à 4, **caractérisé en ce que** des connecteurs de bobine (94) se croisent à l'intérieur d'un enroulement de phase (120, 121, 122).

6. Procédé selon la revendication 1 ou 2, **caractérisé en ce que** dans une rainure (105), la première bobine (82.1) et la seconde bobine (82.2) sont reliées l'une à l'autre par un connecteur de bobine (94.1) et directement l'une derrière l'autre de manière solidaire.
